(19)

Europäisches
Patentamt
European
Patent Office
Office européen
des brevets

(11) **EP 3 252 636 A1**

(12) **EUROPEAN PATENT APPLICATION**

(43) Date of publication:
06.12.2017 Bulletin 2017/49

(51) Int Cl.:
*G06F 21/14* (2013.01)  *G06F 21/56* (2013.01)
*G06F 21/33* (2013.01)

(21) Application number: 17177215.5

(22) Date of filing: 14.03.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 23.08.2012 GB 201215075

(62) Document number(s) of the earlier application(s) in
accordance with Art. 76 EPC:
**13717810.9 / 2 888 689**

(71) Applicant: **VZInternet Limited
Leicester, LE4 9UJ (GB)**

(72) Inventor: **BIRDI, Satnam Singh
Leicester, Leicestershire LE4 9UJ (GB)**

(74) Representative: **EIP
EIP Europe LLP
Fairfax House
15 Fulwood Place
London WC1V 6HU (GB)**

Remarks:
This application was filed on 27-06-2017 as a
divisional application to the application mentioned
under INID code 62.

(54) **DATA VERIFICATION**

(57)     Data verification is performed in a data communication system comprising a data verification provider server system and user equipment. The user equipment potentially comprises malicious software element(s) that can communicate data via a first channel. A second channel is established separately from the first channel for communicating data with the data verification provider. Data identifying one or more algorithms to be used to derive output data from given input data is received via the second channel. The algorithm(s) are associated with a given data verification request from the data verification provider and vary between different data verification requests from the data verification provider. The algorithm(s) and received input data are used to derive output data. The output data is transmitted via the second channel. The data verification provider may compare the derived output data with expected output data for the given data verification request to determine a data verification result.

FIG. 1

**Description**

Technical Field

The present invention relates to data verification.

Background

Online banking is currently suffering from three main types of attack.

One of these attacks is so-called transaction hijack, where the user's transaction is changed on the fly by malware while the user is presented with the transaction they believe they are authorising. This is because online transactions contain a security flaw at the transacting stage in their lifecycle, which allows post-user-authentication transaction fraud to be perpetrated. This security flaw causes a specific dilemma that is faced by online data processing organisations; they cannot be certain they are processing an authenticated user's actual transaction request.

In more detail, at the first stage of an online transaction lifecycle, a connection is made between a transacting device, such as a Personal Computer (PC) or a smartphone, and a transacting organisation, such as a bank. At the second stage, a secure connection is established between the transacting device and the transacting organisation, for example using Transport Layer Security (TLS). At the third stage, the user authenticates themselves to the bank via the secure connection. At the fourth stage, the user starts a transaction session. At the fifth stage, which is the transacting stage, the user sends a transaction request to the bank, the bank sends a request back to the user to verify that the details of the transaction are correct and the user confirms (or otherwise) the transaction request. This may be repeated as necessary. At the sixth stage, the transaction verification session ends.

Thus, although the user is authenticated and data is being transmitted over a secure connection in encrypted form, the data is presented to the user in a decrypted, readable form and it is prone to fraudulent manipulation while in the unencrypted form. For example, a vulnerability exploited by the Man-in-the-Browser (MitB) attack and its mobile phone counterpart known as the Man-in-the-Mobile (MitMo) attack is as follows.

A transaction request is entered by the user into the browser or mobile application. The entered data is altered by the malware before the bank receives it. The bank sends back a transaction verification request which includes the altered data. The received data is altered back again to the original transaction data by the malware before the user sees it and consequently confirms the transaction. The bank receives a confirmation from an authenticated user and proceeds unaware that it is processing a fraudulent transaction.

In terms of the current defence landscape for transaction hijacking, existing transaction verification solutions try to defend against transaction hijacking using a variety of out-of-band and in-band verification techniques. The existing techniques are vulnerable to being compromised and/or already have been compromised.

For example, current solutions to circumvent this vulnerability generally either use software to protect the operating environment or require separate transaction verification devices such as mobile phones or digipasses. Software defences are now themselves being actively attacked and compromised and the hardware solutions, while more effective, are inconvenient, prone to failure and have also been compromised. Furthermore, outside the trust relationships users have with their banks, transaction verification via mobile phone necessitates sharing personal mobile telephone numbers with potentially non-secure third party organisations. Having different physical digipasses for every online organisation a user might transact with is unrealistic, impractical and also potentially insecure as software simulations of digipasses are readily available and used by cybercriminals.

Another type of attack is so-called page poisoning, where the user is presented with what ostensibly is a valid login page from a bank but the page is altered to ask for additional credentials during login that are used to allow malware to automatically generate covert fraudulent transaction(s) unbeknownst to the user while the user is logged in. There are currently no viable defences to page poisoning. This is a serious dilemma for online-banking. The only possible options are: a) use a dedicated device, for example a dedicated PC for online-banking that is not used to browse the Internet generally; or b) use a bootable CD to load a clean-room operating system. Both options are actively being considered by the banking industry because there is currently no viable alternative to these two approaches.

Yet another type of attack is so-called spear phishing, where the user is fooled into yielding their credentials without visiting the banking site. These attacks typically target high-net-worth individuals and organisations. These credentials are then used by a remote server to automatically generate covert fraudulent transaction(s) in a variety of complex ways that fool a bank's behavioural anomaly detection systems. There is currently no defence to a spear fishing attack and it is arguably the most damaging attack to a bank's reputation.

It would be desirable to provide a form of defence against at least some of these and/or other types of attack.

More generally, it would be desirable to provide more secure systems for verifying data, whether in the context of online transacting, such as online banking, or otherwise.

Summary

According to a first aspect of the invention, there is provided a method of verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the data verification provider server system;
receiving, via the second data communication channel, data identifying one or more algorithms to be used to derive output data from given input data, the one or more algorithms being associated with a given data verification request from the data verification provider server system and varying between different data verification requests from the data verification provider server system;
using the one or more algorithms and received input data to derive output data; and
transmitting the output data derived using the one or more algorithms via the second data communication channel, whereby the data verification provider server system may compare the derived output data with expected output data for the given data verification request to determine a data verification result.

According to a second aspect of the invention, there is provided user equipment for verifying data in a data communication system, the data communication system comprising:

a data verification provider server system,
the user equipment potentially comprising one or more malicious software elements that can communicate data via a first data communication channel, wherein the user equipment comprises:

one or more processors operable to establish a second data communication channel, separate from the first data communication channel, for communicating data with the data verification provider server system;
one or more receivers operable to receive, via the second data communication channel, data identifying one or more algorithms to be used to derive output data from given input data, the one or more algorithms being associated with a given data verification request from the data verification provider server system and varying between different data verification requests from the data verification provider server system;
one or more processors operable to use the one or more algorithms and received input data to derive output data; and
one or more receivers operable to transmit the output data derived using the one or more algorithms via the second data communication channel, whereby the data verification provider server system may compare the derived output data with expected output data for the given data verification request to determine a data verification result.

According to a third aspect of the invention, there is provided computer software adapted to perform a method of verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the data verification provider server system;
receiving, via the second data communication channel, data identifying one or more algorithms to be used to derive output data from given input data, the one or more algorithms being associated with a given data verification request from the data verification provider server system and varying between different data verification requests from the data verification provider server system;
using the one or more algorithms and received input data to derive output data; and
transmitting the output data derived using the one or more algorithms via the second data communication channel, whereby the data verification provider server system may compare the derived output data with expected output data for the given data verification request to determine a data verification result.

According to a fourth aspect of the invention, there is provided a computer program product comprising a non-transitory computer-readable storage medium having computer readable instructions stored thereon, the computer readable instructions being executable by a computerised device to cause the computerised device to perform a method for verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the data verification provider server system;
receiving, via the second data communication channel, data identifying one or more algorithms to be used to derive output data from given input data, the one or more algorithms being associated with a given data verification request from the data verification provider server system and varying between different data verification requests from the data verification provider server system;
using the one or more algorithms and received input data to derive output data; and
transmitting the output data derived using the one or more algorithms via the second data communication channel, whereby the data verification provider server system may compare the derived output data with expected output data for the given data verification request to determine a data verification result.

According to a fifth aspect of the invention, there is provided a method of verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the user equipment;
selecting one or more algorithms to be used to derive output data from given input data for a given data verification request, the one or more algorithms being selected so as to vary between different data verification requests;
associating the selected one or more algorithms with the given data verification request;
transmitting data identifying the selected one or more algorithms via the second data communication channel;
receiving output data via the second data communication channel;
comparing the received output data with expected output data for the given data verification request, the expected output data being determined using the selected one or more algorithms; and
determining a data verification result based at least partly on said comparing.
Some embodiments comprise:

selecting the one or more algorithms non-deterministically for the given data verification request.

According to a sixth aspect of the invention, there is provided a data verification provider server system for verifying data in a data communication system, the data communication system comprising:

user equipment potentially comprising one or more malicious software elements that can communicate data via a first data communication channel,
the data verification provider server system comprising:

one or more processors operable to establish a second data communication channel, separate from the first data communication channel, for communicating data with the user equipment;
one or more processors operable to select one or more algorithms to be used to derive output data from given input data for a given data verification request, the one or more algorithms being selected so as to vary between different data verification requests;
one or more processors operable to associate the selected one or more algorithms with the given data verification request;
one or more transmitters operable to transmitting data identifying the selected one or more algorithms via the second data communication channel;
one or more receivers operable to output data via the second data communication channel;
one or more processors operable to compare the received output data with expected output data for the given data verification request, the expected output data being determined using the selected one or more algorithms; and
one or more processors operable to determine a data verification result based at least partly on said comparing.

According to a seventh aspect of the invention, there is provided computer software adapted to perform a method of verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the user equipment;
selecting one or more algorithms to be used to derive output data from given input data for a given data verification request, the one or more algorithms being selected so as to vary between different data verification requests;
associating the selected one or more algorithms with the given data verification request;
transmitting data identifying the selected one or more algorithms via the second data communication channel;
receiving output data via the second data communication channel;
comparing the received output data with expected output data for the given data verification request, the expected output data being determined using the selected one or more algorithms; and
determining a data verification result based at least partly on said comparing.

According to an eighth aspect of the invention, there is provided a computer program product comprising a non-transitory computer-readable storage medium having computer readable instructions stored thereon, the computer readable instructions being executable by a computerised device to cause the computerised device to perform a method of verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the user equipment;
selecting one or more algorithms to be used to derive output data from given input data for a given data verification request, the one or more algorithms being selected so as to vary between different data verification requests;
associating the selected one or more algorithms with the given data verification request;
transmitting data identifying the selected one or more algorithms via the second data communication channel;
receiving output data via the second data communication channel;
comparing the received output data with expected output data for the given data verification request, the expected output data being determined using the selected one or more algorithms; and
determining a data verification result based at least partly on said comparing.

Further features and advantages of the invention will become apparent from the following description of preferred embodiments of the invention, given by way of example only, which is made with reference to the accompanying drawings.

Brief Description of the Drawings

Figure 1 is a schematic representation of a data communication system in accordance with some embodiments.
Figure 2 is a signalling diagram depicting a method of verifying data at user equipment in accordance with some

5

embodiments.

Figure 3 is a signalling diagram depicting a method of verifying data at a data verification provider server system in accordance with some embodiments.

Figures 4A and 4B show a signalling diagram depicting a method of verifying data in a data communication system in accordance with some embodiments.

Figure 5 is a schematic representation of user equipment in accordance with some embodiments.

Figure 6 is a schematic representation of a data verification provider server system in accordance with some embodiments.

Detailed Description

In accordance with a first exemplary embodiment, there is provided a method of verifying data in a data communication system. The data communication system comprises a data verification provider server system and user equipment potentially comprising one or more malicious software elements that can communicate data via a first data communication channel. The method comprises: establishing a second data communication channel, separate from the first data communication channel, for communicating data with the data verification provider server system; receiving, via the second data communication channel, data identifying one or more algorithms to be used to derive output data from given input data, the one or more algorithms being associated with a given data verification request from the data verification provider server system and varying between different data verification requests from the data verification provider server system; using the one or more algorithms and received input data to derive output data; and transmitting the output data derived using the one or more algorithms via the second data communication channel, whereby the data verification provider server system may compare the derived output data with expected output data for the given data verification request to determine a data verification result.

Varying the one or more algorithms increases the behavioural inconsistency across different data verification requests. Since malware exploits behavioural consistency in its attack on the data verification process, the likelihood of a successful attack by malware may be reduced.

In some embodiments, the one or more algorithms associated with the given data verification request from the data verification provider server system vary in relation to the given data verification request from the data verification provider server system. For example, a first algorithm associated with the given data verification request may be used to derive first output data in relation to the given data verification request and a second, different algorithm associated with the given data verification request may be used to derive second output data in relation to the given data verification request.

In some embodiments, the one or more algorithms vary non-deterministically between different data verification requests from the data verification provider server system.

In some embodiments, the method comprises: selecting one or more locations in memory at which to store the one or more algorithms, at least some of the one or more locations being selected so as to vary between different data verification requests from the data verification provider server system; and storing the one or more algorithms in the selected one or more locations in memory.

In some embodiments, the method comprises: selecting one or more decoy algorithms to be stored along with the one or more algorithms in memory; and storing the one or more algorithms and the selected one or more decoy algorithms in the memory.

In some embodiments, the method comprises storing the one or more algorithms in protected memory at the communication device.

In some embodiments, the method comprises receiving data to be verified via the second data communication channel.

In some embodiments, the method comprises identifying data to be verified to a user via a user interface.

Some embodiments comprise receiving user input via a user interface, the user input corresponding to a data verification response from a user.

In some embodiments, the method comprises using at least the received user input as input data for the one or more algorithms.

In some embodiments, the method comprises using at least some data to be verified as input data for the one or more algorithms.

In some embodiments, the method comprises establishing the second data communication channel using a shared secret key.

In some embodiments, the method comprises generating the shared secret key in cooperation with the data verification provider server system as part of an establishment procedure for establishing the second data communication channel.

In some embodiments, the method comprises: receiving one or more data verification software elements from a remote source via a data communication network; and using the one or more data verification software elements to perform data verification.

In some embodiments, the method comprises receiving at least part of the one or more data verification software elements, or data identifying a remote location at which the one or more data verification software elements are retrievable, via the first data communication channel.

In some embodiments, the method comprises receiving at least part of the one or more data verification software elements, or data identifying a remote location at which the one or more data verification software elements are retrievable, via the second data communication channel.

In some embodiments, the one or more data verification software elements are selected to vary between different data verification requests from the data verification provider server system.

In some embodiments, the method comprises: identifying one or more locations in memory at which to store the one or more data verification software elements, at least some of the one or more locations varying between different data verification requests from the data verification provider server system; and storing the one or more data verification software elements in the identified one or more locations in memory.

In some embodiments, the method comprises: receiving, via the second data communication channel, data identifying one or more further algorithms to be used to derive output data from given input data, the one or more further algorithms being associated with the given data verification request from the data verification provider server system and varying between different data verification requests from the data verification provider server system; using the one or more further algorithms and received input data to derive further output data; and transmitting the further output data via the second data communication channel, whereby the data verification provider server system may compare the derived further output data with expected further output data for the given data verification request to determine a data verification result.

In accordance with a second exemplary embodiment, there is provided user equipment for verifying data in a data communication system. The data communication system comprises a data verification provider server system. The user equipment potentially comprises one or more malicious software elements that can communicate data via a first data communication channel. The user equipment comprises: one or more processors operable to establish a second data communication channel, separate from the first data communication channel, for communicating data with the data verification provider server system; one or more receivers operable to receive, via the second data communication channel, data identifying one or more algorithms to be used to derive output data from given input data, the one or more algorithms being associated with a given data verification request from the data verification provider server system and varying between different data verification requests from the data verification provider server system; one or more processors operable to use the one or more algorithms and received input data to derive output data; and one or more transmitters operable to transmit the output data derived using the one or more algorithms via the second data communication channel, whereby the data verification provider server system may compare the derived output data with expected output data for the given data verification request to determine a data verification result.

In accordance with a third exemplary embodiment, there is provided computer software adapted to perform a method of verifying data in a data communication system. The data communication system comprises a data verification provider server system and user equipment potentially comprising one or more malicious software elements that can communicate data via a first data communication channel. The method comprises: establishing a second data communication channel, separate from the first data communication channel, for communicating data with the data verification provider server system; receiving, via the second data communication channel, data identifying one or more algorithms to be used to derive output data from given input data, the one or more algorithms being associated with a given data verification request from the data verification provider server system and varying between different data verification requests from the data verification provider server system; using the one or more algorithms and received input data to derive output data; and transmitting the output data derived using the one or more algorithms via the second data communication channel, whereby the data verification provider server system may compare the derived output data with expected output data for the given data verification request to determine a data verification result.

In accordance with a fourth exemplary embodiment, there is provided a computer program product comprising a non-transitory computer-readable storage medium having computer readable instructions stored thereon. The computer readable instructions are executable by a computerised device to cause the computerised device to perform a method for verifying data in a data communication system. The data communication system comprises a data verification provider server system and user equipment potentially comprising one or more malicious software elements that can communicate data via a first data communication channel. The method comprises: establishing a second data communication channel, separate from the first data communication channel, for communicating data with the data verification provider server system; receiving, via the second data communication channel, data identifying one or more algorithms to be used to derive output data from given input data, the one or more algorithms being associated with a given data verification request from the data verification provider server system and varying between different data verification requests from the data verification provider server system; using the one or more algorithms and received input data to derive output data; and transmitting the output data derived using the one or more algorithms via the second data communication channel, whereby the data verification provider server system may compare the derived output data with expected output data for the given data verification request to determine a data verification result.

In accordance with a fifth exemplary embodiment, there is provided a method of verifying data in a data communication system. The data communication system comprises a data verification provider server system and user equipment potentially comprising one or more malicious software elements that can communicate data via a first data communication channel. The method comprises: establishing a second data communication channel, separate from the first data communication channel, for communicating data with the user equipment; selecting one or more algorithms to be used to derive output data from given input data for a given data verification request, the one or more algorithms being selected so as to vary between different data verification requests; associating the selected one or more algorithms with the given data verification request; transmitting data identifying the selected one or more algorithms via the second data communication channel; receiving output data via the second data communication channel; comparing the received output data with expected output data for the given data verification request, the expected output data being determined using the selected one or more algorithms; and determining a data verification result based at least partly on said comparing.

In some embodiments, the method comprises selecting the one or more algorithms non-deterministically for the given data verification request.

In some embodiments, the method comprises transmitting data via the second data communication channel to instruct the user equipment to select one or more locations in memory at which to store the one or more algorithms, at least some of the one or more locations being selected so as to vary between different data verification requests from the data verification provider server system, whereby the user equipment may store the one or more algorithms in the selected one or more locations in memory.

In some embodiments, the method comprises transmitting data via the second data communication channel to instruct the user equipment to select one or more decoy algorithms to be stored along with the one or more algorithms in memory, whereby the user equipment may store the one or more algorithms and the selected one or more decoy algorithms in the memory.

In some embodiments, the method comprises transmitting data to be verified via the second data communication channel.

In some embodiments, the method comprises transmitting data via the second data communication channel to instruct the user equipment to identify data to be verified to a user via a user interface.

In some embodiments, the method comprises establishing the second data communication channel using a shared secret key.

In some embodiments, the method comprises generating the shared secret key in cooperation with the user equipment as part of an establishment procedure for establishing the second data communication channel.

In some embodiments, the method comprises transmitting at least part of one or more data verification software elements such that at least part of the one or more data verification software elements, or data identifying a remote location at which the at least part of the one or more data verification software elements are retrievable, is transmittable to the user equipment via the first data communication channel, the one or more data verification software elements being useable by the user equipment to perform data verification.

In some embodiments, the method comprises transmitting at least part of one or more data verification software elements via the second data communication channel, the one or more data verification software elements being useable by the user equipment to perform data verification.

In some embodiments, the method comprises selecting the one or more data verification software elements to be used in relation to the given data verification request, data verification software elements being selected so as to vary between different data verification requests.

In some embodiments, the method comprises transmitting data via the second data communication channel to instruct the user equipment to select one or more locations in memory at which to store the at least part of the one or more data verification software elements, at least some of the one or more locations being selected so as to vary between different data verification requests.

In some embodiments, the method comprises: selecting one or more further algorithms to be used to derive output data from given input data for the given data verification request, the one or more further algorithms being selected so as to vary between different data verification requests; associating the selected one or more further algorithms with the given data verification request; transmitting data identifying the selected one or more further algorithms via the second data communication channel; receiving output data via the second data communication channel; comparing the received output data with further expected output data for the given data verification request, the further expected output data being determined using the selected one or more further algorithms; and determining a data verification result based at least partly on said comparing.

In accordance with a sixth exemplary embodiment, there is provided a data verification provider server system for verifying data in a data communication system. The data communication system comprises user equipment potentially comprising one or more malicious software elements that can communicate data via a first data communication channel. The data verification provider server system comprises: one or more processors operable to establish a second data communication channel, separate from the first data communication channel, for communicating data with the user equipment; one or more processors operable to select one or more algorithms to be used to derive output data from given input data for a given data verification request, the one or more algorithms being selected so as to vary between different data verification requests; one or more processors operable to associate the selected one or more algorithms with the given data verification request; one or more transmitters operable to transmitting data identifying the selected one or more algorithms via the second data communication channel; one or more receivers operable to output data via the second data communication channel; one or more processors operable to compare the received output data with expected output data for the given data verification request, the expected output data being determined using the selected one or more algorithms; and one or more processors operable to determine a data verification result based at least partly on said comparing.

In accordance with a seventh exemplary embodiment, there is provided computer software adapted to perform a method of verifying data in a data communication system. The data communication system comprises a data verification provider server system and user equipment potentially comprising one or more malicious software elements that can communicate data via a first data communication channel. The method comprises: establishing a second data communication channel, separate from the first data communication channel, for communicating data with the user equipment; selecting one or more algorithms to be used to derive output data from given input data for a given data verification request, the one or more algorithms being selected so as to vary between different data verification requests; associating the selected one or more algorithms with the given data verification request; transmitting data identifying the selected one or more algorithms via the second data communication channel; receiving output data via the second data communication channel; comparing the received output data with expected output data for the given data verification request, the expected output data being determined using the selected one or more algorithms; and determining a data verification result based at least partly on said comparing.

In accordance with an eighth exemplary embodiment, there is provided a computer program product comprising a non-transitory computer-readable storage medium having computer readable instructions stored thereon. The computer readable instructions are executable by a computerised device to cause the computerised device to perform a method of verifying data in a data communication system. The data communication system comprises a data verification provider server system and user equipment potentially comprising one or more malicious software elements that can communicate data via a first data communication channel. The method comprises: establishing a second data communication channel, separate from the first data communication channel, for communicating data with the user equipment; selecting one or more algorithms to be used to derive output data from given input data for a given data verification request, the one or more algorithms being selected so as to vary between different data verification requests; associating the selected one or more algorithms with the given data verification request; transmitting data identifying the selected one or more algorithms via the second data communication channel; receiving output data via the second data communication channel; comparing the received output data with expected output data for the given data verification request, the expected output data being determined using the selected one or more algorithms; and determining a data verification result based at least partly on said comparing.

Various embodiments will now be described, by way of example only, that relate to verifying data in the context of online transactions and specifically relate to preventing malware-related online transactional fraud in real-time. However, other implementations are envisaged and will be described in more detail below.

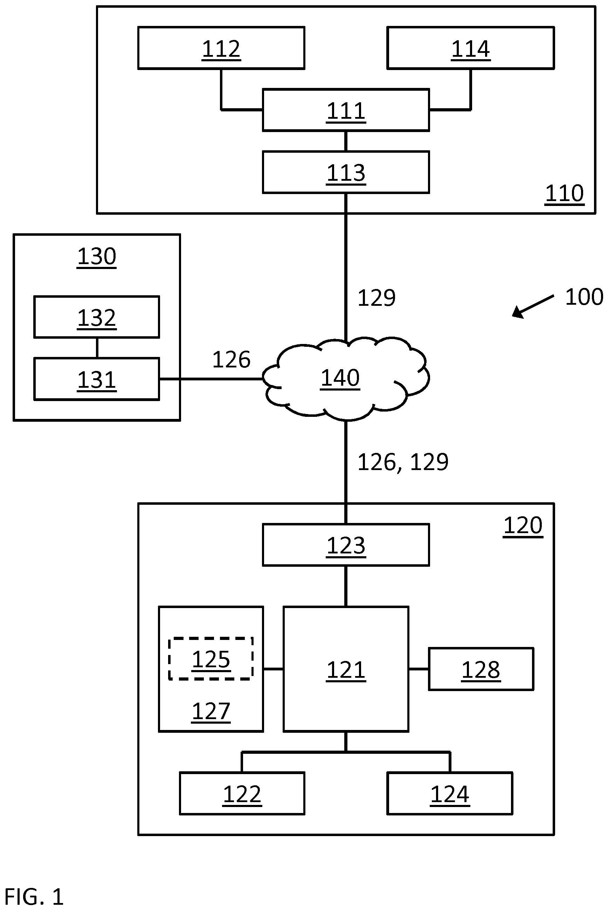

Figure 1 is a schematic representation of a data communication system 100. The data communication system 100 may be used to verify data in accordance with various embodiments described herein.

The data communication system 100 comprises a data verification provider server system 110 associated with a data verification provider. The data verification provider server system 110 is used to verify data in the data communication system 100, in cooperation with user equipment 120 associated with a user and a data processing organisation server system 130 associated with a data processing organisation.

The data verification provider server system 110 communicates with the user equipment 120 via an appropriate interface, such as a data communications network 140 (for example the Internet). The data verification provider server system 110 also communicates with the data processing organisation server system 130 via an appropriate interface, for example the data communications network 140 or another type of connection such as leased lines. The data verification provider server system 110 and/or the data processing organisation server system 130 may comprise one or more servers that may be co-located or located in different physical locations.

The user equipment 120 may comprise a single user device such as a PC, a smartphone, a tablet computing device, a laptop computing device, a smart television or the like. Alternatively, the user equipment 120 may comprise several such devices, for example a PC which is used to make requests requiring verification and an associated smartphone that is used to perform secure data verification.

The user equipment 120 comprises one or more processors 121 that carry out instructions, for example embodied in one or more computer programs that may stored in a memory 122. The user equipment 120 includes a network interface 123 via which the user equipment 120 can communicate, in other words transmit and receive, data via the data communication network 140. The user equipment 120 includes one or more user interfaces (UIs) 124 via which the user equipment 120 can output data for a user and receive input data from the user. The user interface(s) 124 may, for example, comprise a touch-sensitive screen that both displays data for the user and also captures user input.

The user equipment 120 is potentially infected in that it potentially comprises one or more malicious software elements (hereinafter referred to generally as "malware") 125. The malware 125 can, amongst other things, manipulate data communicated between the user equipment 120 and the data processing organisation server system 130 via a first data communication channel 126. In some cases, the user equipment 120 is not, in fact, infected by malware 125. Nevertheless, the data verification techniques described herein may still be used.

In some embodiments, the user equipment 120 comprises one or more legitimate software elements 127 that are potentially compromised by the one or more malicious software elements 125. The legitimate software element(s) 127 may be, for example, a web browser software application, a dedicated online banking application or the like.

In some embodiments, the user equipment 120 comprises one or more data verification software elements 128. The data verification software element(s) 128 are different from the potentially compromised legitimate software element(s) 127. The data verification software element(s) 128 may be, for example, a Java™ Applet, a virtual verification device, a dedicated data verification application or the like.

The data verification software element(s) 128 may be installed on the user equipment 120 prior to a given data verification request or may be downloaded on-demand for some or all data verification requests involving the user equipment 120. In some embodiments, the user equipment 120 receives the data verification software element(s) 128 from a remote source via the data communications network 140 or in another manner.

In some embodiments, the user equipment 120 receives the data verification software element(s) 128, or data (such as a Uniform Resource Locator (URL)) identifying a remote location at which the data verification software element(s) 128 is retrievable, via the first data communication channel 126. However, since the first data communication channel 126 is potentially compromised, in some embodiments, only a first part of the data verification software element(s) 128 (or data identifying a remote location at which the first part of the data verification software element(s) 128 is retrievable) is communicated via the first data communication channel 126 and one or more further parts of the data verification software element(s) 128 that are required to be able to complete the data verification process are retrieved other than via the first data communication channel 126.

In some embodiments, the data verification software element(s) 128 are selected so as to vary between different data verification requests from the data verification provider server system 110. For example, a first verification software element 128 may be used in relation to a first data verification request from the data verification provider server system 110 and a second, different data verification software element 128 may be used in relation to a second data verification request from the data verification provider server system 110. The first and second data verification software elements 128 are different in that at least one characteristic of the way in which they perform data verification is different between the first and second verification software elements 128. For example, the first data verification software element 128 may present data to be verified by the user via the user interface 124 differently to the way in which the second data verification software element 128 presents data to be verified by the user via the user interface 124. In another example, the first data verification software element 128 may derive a data verification result differently to the way in which the second data verification software element 128 derives a data verification result. Varying the nature of the verification software elements 128 in this way introduces a degree of inconsistency into the data verification process which reduces the likelihood of the malware 125, which relies upon behavioural consistency, being able to compromise the data verification process.

In some embodiments, the way in which the data verification software elements 128 vary for different data verification requests is selected so as to reduce the likelihood of the malware 125 being able to determine the way in which a data verification software element 128 will perform data verification given knowledge by the malware 125 of the way in which one or more previous data verification software element(s) 128 performed data verification. In some embodiments, the data verification software element(s) 128 may be selected randomly or non-deterministically to increase the likelihood that the malware 125 will be unable to determine how the verification software element(s) 128 will perform data verification within the relevant timeframe of a given data verification request.

In some embodiments, the user equipment 120 identifies one or more locations in memory 122 at which to store and/or load and/or run the data verification software element(s) 128. At least some of the one or more locations may be selected so as to vary between different data verification requests from the data verification provider server system 110. In other words, the location in which data verification software element(s) 128 used in relation to a first data verification request are stored may be selected to be different from the location in which data verification software element(s) 128 used in relation to a second data verification request are stored. This makes it difficult for the malware 125 to determine the memory location(s) at which the data verification software element(s) 128 are stored and/or are loaded and/or are running because varying the memory location(s) introduces an element of inconsistency which reduces the likelihood of the malware 125, which relies upon consistency, from being able to determine the memory location(s) in which the verification software element(s) 128 are stored.

In some embodiments, the way in which the memory location(s) vary for different data verification requests is selected so as to reduce the likelihood of the malware 125 being able to determine the memory location(s) in which the verification software element(s) 128 is stored given knowledge by the malware 125 of the memory location(s) in which previous verification software element(s) 128 were stored. In some embodiments, the memory location(s) are selected randomly or non-deterministically to increase the likelihood that the malware 125 will be unable to determine the memory location(s) in which the verification software element(s) 128 are stored within the relevant timeframe of a given data verification request.

The user equipment 120 establishes a second data communication channel 129, separate from the first data communication channel, for communicating data with the data verification provider server system 110.

As explained above, since the first data communication channel 126 is potentially compromised, in some embodiments, only a first part of the data verification software element(s) 128 (or data identifying a remote location at which the first part of the data verification software element(s) 128 is retrievable) is communicated via the first data communication channel 126. One or more further parts of the data verification software element(s) 128 that are required to be able to complete the data verification process may be retrieved from the data verification provider server system 110 via the second data communication channel 129.

In some embodiments, the second data communication channel 129 is established using a shared secret key; the secret key being shared between the user equipment 120 and the data verification provider server system 110.

In some embodiments, the second data communication channel 129 is established between the data verification software element(s) 128 and the data verification provider server system 110. The second data communication channel 129 may be established using a shared secret key; the secret key being shared between the data verification software element(s) 128 and the data verification provider server system 110. In such embodiments, the shared secret key is stored in the memory 122 in such a way as to minimise the likelihood of the malware 125 being able to identify the shared secret key if it can access the memory 122. This is to reduce the likelihood of the malware 125 being able to decode or decrypt communications sent between the data verification software element(s) 128 and the data verification provider server system 110.

A new shared secret key may be generated each time a new data communication channel 129 is established between the user equipment 120 and the data verification provider server system 110. As such, even if the malware 125 determines or obtains a shared secret key relating to a previously established data communication channel 129, the previously generated shared secret key is not useful for decrypting communications over the new data communication channel.

In some embodiments, the shared secret key is generated by the user equipment 120 in cooperation with the data verification provider server system 110 as part of an establishment procedure for establishing the second data communication channel 129. Generating the shared secret key as part of an establishment procedure for establishing the second data communication channel 129, as opposed to the shared secret key existing prior to connection establishment, reduces the likelihood of the malware 125 being able to determine the particular shared secret key being used to secure the second data communication channel 129 in relation to a given data verification request and being able to decrypt data communicated via the second data communication channel 129. There are various mechanisms by means of which a shared secret key may be established in this manner, for example using a Diffie-Hellman key exchange.

The user equipment 120 receives, via the second data communication channel 129, data identifying one or more algorithms to be used to derive output data from given input data. In some embodiments, the user equipment 120 receives the one or more algorithms themselves via the second data communication channel 129. In some embodiments, the user equipment 120 may already have access to the one or more algorithms (possibly along with other algorithms) and the data received via the second data communication channel 129 identifies the particular one or more algorithms.

The one or more algorithms are associated with, or are bound to, a given data verification request from the data verification provider server system 110 and are selected so as to vary between different data verification requests from the data verification provider server system 110. Varying the algorithms between different data verification requests removes some of the behavioural consistency that is currently exploited in the three types of attack described above, as will now be explained.

The user equipment 120 uses the one or more algorithms along with received input data to derive output data. The input data may be received as a result of user interaction via the user interface 124, may be received via the data communications network 140 via the network interface 123 or may be received in some other way. The received input data is input into the one or more algorithms and the output data is thereby derived.

The term 'algorithm' is intended to mean a process that takes input data and generates output data and is not limited to, for example, a mathematical function that defines a relationship between an input value and an output value. Other types of algorithm, such as an algorithm that transforms input data in one form into output data in another form are envisaged. In some embodiments, the one or more algorithms are selected such that the input data is difficult to determine given the output data; a hash function or cryptographic hash function may be used to provide such functionality.

In more detail, a first algorithm may be used in relation to a first data verification request and a second, different algorithm may be used in relation to a second data verification request. Varying the algorithm removes some of the behavioural consistency that is currently being exploited by malware 125.

For example, for a first data verification request, a first algorithm, $f_1$, may take first input data, A, and generate corresponding output data, $\alpha$. The first algorithm, $f_1$, may take second, different input data, B, and generate corresponding output data, $\beta$ (which is different from $\alpha$).

For a second data verification request, a second, different algorithm, $f_2$, may take the first input data, A, and generate corresponding output data, $\gamma$ (which is different from $\alpha$ and $\beta$). The second algorithm, $f_2$, may take the second input data, B, and generate corresponding output data, $\delta$ (which is different from $\alpha$, $\beta$ and $\gamma$).

In the context of data verification, the first input data, A, may correspond to a user confirming displayed data to be verified as being correct and the second input data, B, may correspond to a user rejecting displayed data to be verified as being incorrect. The data verification provider server system 110 calculates $f_1(A)=\alpha$ for the first data verification request and treats this as an expected output value to be received from the user device 120 if the user has expressly confirmed the data to be verified in relation to the first data verification request to be correct and calculates $f_1(B)=\beta$ for the first data verification request and treats this as an expected output value to be received from the user device 120 if the user has expressly rejected the data to be verified in relation to the first data verification request to be incorrect. In some embodiments, if the data verification provider server system 110 receives a value other than $\alpha$ in relation to the first data verification request, the data verification provider server system 110 considers the data as not having been verified to be correct and takes an appropriate action, such as terminating the data verification process.

In relation to the second data verification request, the data verification provider server system 110 expects to receive different output values, $f_2(A)=\gamma$ and $f_2(B)=\delta$ corresponding to confirmation and rejection respectively. Thus, even where the same input data is used in relation to different data verification requests, the corresponding output data may be made to vary in relation to different data verification requests by varying the algorithm that is used to derive the output. It is also possible to vary the input data corresponding to confirmation and rejection for different data verification requests. For example, in relation to the second data verification request, third input data, C, may correspond to a user confirming displayed data to be verified as being correct and the fourth input data, D, may correspond to a user rejecting displayed data to be verified as being incorrect, where $f_2(C)=\varepsilon$ and $f_2(D)=\zeta$, where $\varepsilon$ and $\zeta$ are different from each other and are both different from $\alpha$, $\beta$, $\gamma$ and $\delta$.

Thus, even if the malware 125 can somehow obtain the first algorithm, $f_1$, and input data, A and/or B, and the corresponding output data, $\alpha$ and/or $\beta$, such knowledge cannot be used in itself to derive $\gamma$ or $\delta$ ($\varepsilon$ or $\zeta$ as the case may be), since the second algorithm, $f_2$, is used to derive the corresponding result.

In some embodiments, the one or more algorithms vary non-deterministically between different data verification requests from the data verification provider server system 110. This introduces inconsistency in such a way that the malware 125 cannot determine, in advance, which one or more algorithms will be required to derive the correct output data for a given data verification request.

In some embodiments, the user equipment 120 selects one or more locations in the memory 122 at which to store the one or more algorithms. In some embodiments, the user equipment 120 determines the one or more locations in the memory 122 at which to store the one or more algorithms itself, for example from a set of possible memory locations. In some embodiments, the user equipment 120 receives instructions or other data, for example from the data verification provider server system 110, that identify the memory location(s) at which to store the one or more algorithms. The instructions may, for example, be received in the second part of the data verification software element(s) 128, for example after one or more initial checks have been performed, if the data verification software element(s) 128 are provided in multiple parts.

In some embodiments, at least some of the one or more locations in the memory 122 are selected so as to vary between different data verification requests from the data verification provider server system 110. This introduces a degree of inconsistency in terms of where the one or more algorithms are stored, which reduces the likelihood of the malware 125 being able to identify the relevant memory location(s). If the one or more algorithms are consistently stored in the same memory location(s) each time data verification is performed, the malware 125 may be able to learn the memory location(s) and try to identify the one or more algorithms each time data verification is performed.

In some embodiments, the user equipment 120 selects one or more decoy algorithms to be stored along with the one or more algorithms in the memory 122 and stores the one or more algorithms and the selected one or more decoy algorithms in the memory 122. This may be implemented, for example, using a jump table that includes both the one or more algorithms and the selected one or more decoy algorithms, where the entry or entries in the jump table corresponding to the one or more algorithms is known only to the data verification software element(s) 128 and not to the malware 125. Even if the malware 125 can identify the memory location(s) in which the one or more algorithms are stored, the malware 125 would obtain not only the one or more algorithms to be used to derive the correct data verification result, but also decoy algorithms which, if used, would not derive the correct result. The user equipment 120 may generate the one or more decoy algorithms itself or may receive the one or more decoy algorithms from a remote source, such as from the data verification provider server system 110, via the second data communication channel 129.

In some embodiments, the user equipment 120 stores the one or more algorithms in protected memory. This makes it difficult for the malware 125 to access the one or more algorithms, but relies upon the extent to which the protected part of the memory 122 is, in fact, protected from access by the malware 125 or other malicious software elements.

In some embodiments, the user equipment 120 receives data to be verified via the second data communication channel 129. In some embodiments, the user equipment 120 receives data to be verified in a different manner, such as via the first data communication channel, via the user interface 124 or the like.

In some embodiments, the user equipment 120 identifies data to be verified to the user via the user interface 124. The way in which the data to be verified is identified to the user depends on implementation, but may involve displaying the data to the user in a visual manner, outputting audio that identifies the data to be verified or the like. Different mechanisms for identifying the data to be verified to the user for different data verification requests so as to increase inconsistency in relation to different data verification instances.

In some embodiments, the user equipment 120 receives user input via the user interface 124. The user input corresponds to a data verification response from a user. Thus, the user may indicate, for example, that the data to be verified is correct, is incorrect, or may provide another form of response. In the context of online transaction verification, the data to be verified may be details of a transaction to be processed, such as the transaction amount, payee details and the like. The responses available to the user may be to confirm/accept the transaction, refuse/decline the transaction and/or to report the transaction as being fraudulent.

In some embodiments, the user equipment 120 uses at least the received user input as input data for the one or more algorithms. In more detail, the data verification provider server system 110 may use at least some of the data to be verified as an input into an algorithm and derive a given output value. The user equipment 120 would then be required to derive the same output value to confirm the integrity of the data to be verified. This is only possible if the user equipment 120 has used the same at least some of the data to be verified as an input into the same algorithm, which provides some degree of assurance as to the integrity of the data to be verified at the user equipment 120.

The user equipment 120 transmits the output data derived using the one or more algorithms via the second data communication channel 129. The data verification provider server system 110 may then compare the derived output data, received via the second data communication channel, with expected output data for the given data verification request to determine a data verification result.

In some embodiments, the data verification techniques described above may be used multiple times in relation to a given data verification request. In particular, in some embodiments, the user equipment 120 receives, via the second data communication channel 129, data identifying one or more further algorithms to be used to derive output data from given input data. The one or more further algorithms are associated with the given data verification request from the data verification provider server system 110 and are selected so as to vary between different data verification requests from the data verification provider server system 110. The user equipment 120 uses the one or more further algorithms and received input data to derive further output data. The user equipment 120 then transmits the further output data via the second data communication channel 129. The data verification provider server system 110 may then compare the derived further output data with expected further output data for the given data verification request to determine a data verification result.

For example, for a first data verification request, a first algorithm, $f_1$, may take first input data, A, and generate corresponding output data, $\alpha$. The first algorithm, $f_1$, may take second, different input data, B, and generate corresponding output data, $\beta$ (which is different from $\alpha$).

The data verification provider server system 110 may require, say, $\alpha$ to be received from the user equipment 120. If the data verification provider server system 110 receives $\alpha$ from the user equipment 120, rather than completing data verification processing, it may expect to receive further output data from the user equipment 120. For example, the data verification provider server system 110 may have transmitted an algorithm, $g_1$, which is different from $f_1$ and $f_2$ to the user equipment 120 and may determine how to proceed with data verification processing depending upon whether it receives an expected value derived using the algorithm $g_1$ from the user equipment 120. In some embodiments, the data verification provider server system 110 may transmit the algorithm $g_1$ to the user equipment 120 if and only if the data verification provider server system 110 received $\alpha$ from the user equipment 120 at the first verification step.

The data verification provider server system 110 comprises one or more processors 111 that carry out instructions, for example embodied in one or more computer programs that may stored in a memory 112. The data verification provider server system 110 includes a network interface 113 via which the data verification provider server system 110 can communicate, in other words transmit and receive, data via the data communication network 140. The data verification provider server system 110 comprises one or more verification process controllers 114 which, under the control of the one or more processors 111 are used to perform various processes and sub-processes relating to data verification. The data verification provider server system 110 cooperates with the user device 120 to establish the second data communication channel 129. The one or more verification process controllers 114 are used to select one or more algorithms to be used to derive output data from given input data for a given data verification request. The one or more verification process controllers 114 select the one or more algorithms being so as to vary between different data verification requests. The one or more verification process controllers 114 associate the selected one or more algorithms with the given data verification request. Data identifying the selected one or more algorithms is transmitted via the second data communication channel 129. Output data is received via the second data communication channel 129. The one or more verification process controllers 114 compare the received output data with expected output data for the given data verification request, the expected output data being determined using the selected one or more algorithms. The one or more verification process controllers 114 determine a data verification result based at least partly on the comparing.

The data processing organisation server system 130 includes a network interface 131 and logic 132 that initiates and coordinates data verification processing for a give data verification request, in relation to the user equipment 120 and the data verification provider server system 110.

With reference again to the three types of attack discussed in detail above, the transaction hijacking attack can thereby be defended against by removing or at least reducing the behavioural consistency that is generally being exploited by malware 125.

Furthermore, the page poisoning attack is made possible by virtue of the fact that data processing organisations currently display the same login page(s) for each transaction via the browser making for easy manipulation by malware 125. As described herein, the verification process may be made inconsistent or 'polymorphic' such that a per-instance mutation of the output data is sent via an out-of-band-channel, the second data communication channel 129, to the data verification provider server system 110. This is made possible by varying the algorithm(s) used to derive the output data for different requests. Thus, even if the input data to the algorithms is consistent across requests, for example if it is the user's PIN, the output data still varies across different requests. This eliminates or at least reduces the behaviourally consistency vulnerability exploit.

The same exploit can be eliminated or at least reduced by varying the verification process itself using data verification software elements 128 that are retrieved on-demand and are stored in different locations in the memory 122 in relation to different data verification requests. In such cases, it is not necessary to mutate what is displayed to the user; simply storing the data verification software elements 128 in different memory locations, for example non-deterministically, will suffice. Furthermore by injecting various checking steps, even if the malware 125 overlays a false display on the user interface 124 to capture a user's login details, those details still cannot be used to create fraudulent transactions because the output of the display and capture process component is not the (input) value that was entered by the user, but a per-instance mutation of what was entered by virtue of a different algorithm being used to derive the output data for different data verification requests from the data verification provider server system 110. If the data verification provider server system 110 confirms that the output data is correct, login may be completed.

The spear fishing attack is currently possible because the entire online interface to a data processing organisation is consistent. With the correct credentials, the entire user engagement including an Internet Protocol (IP) address associated with the user equipment 120 can be simulated without any actual involvement of the real user. Again, it is the behavioural consistency in this high-level business process handling the entire online-session that makes this exploit possible. By making just a single part of the verification process vary, for example non-deterministically, the process may be made polymorphic and the attack may thereby be defeated.

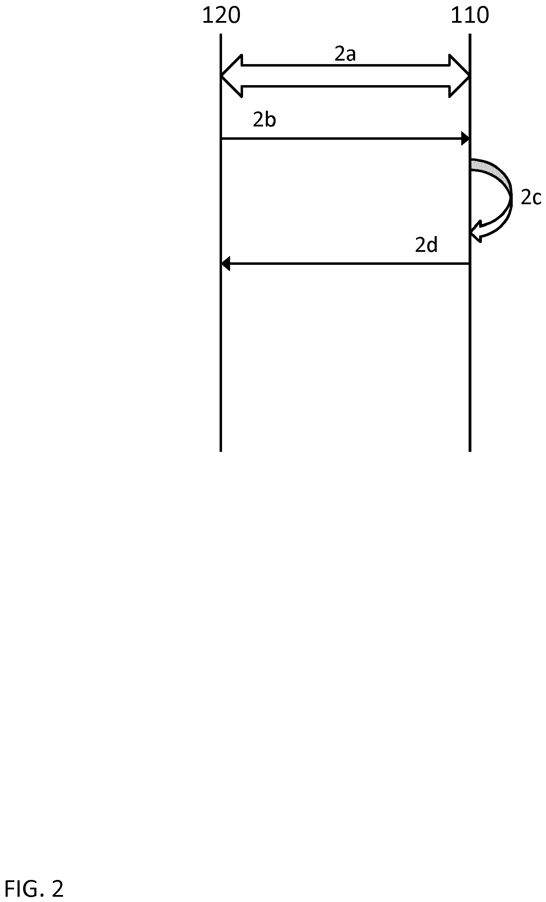

Figure 2 is a signalling diagram depicting a method of verifying data in accordance with some embodiments. The method may be employed in a data communication system 100 such as that depicted in Figure 1 and described above, which includes data verification provider server system 110 and user equipment 120 potentially comprising malware 125 that can communicate data via a first data communication channel 126.

At step 2a, the user equipment 120 establishes a second data communication channel 129, separate from the first data communication channel 126, for communicating data with the data verification provider server system 110.

At step 2b, the user equipment 120 receives, via the second data communication channel 129, data identifying one or more algorithms to be used to derive output data from given input data. The one or more algorithms are associated with a given data verification request from the data verification provider server system 110 and are selected so as to vary between different data verification requests from the data verification provider server system 110.

At step 2c, the user equipment 120 uses the one or more algorithms and received input data to derive output data.

At step 2d, the user equipment 120 transmits the output data derived using the one or more algorithms via the second data communication channel 129. The data verification provider server system 110 may then compare the derived output data with expected output data for the given data verification request to determine a data verification result.

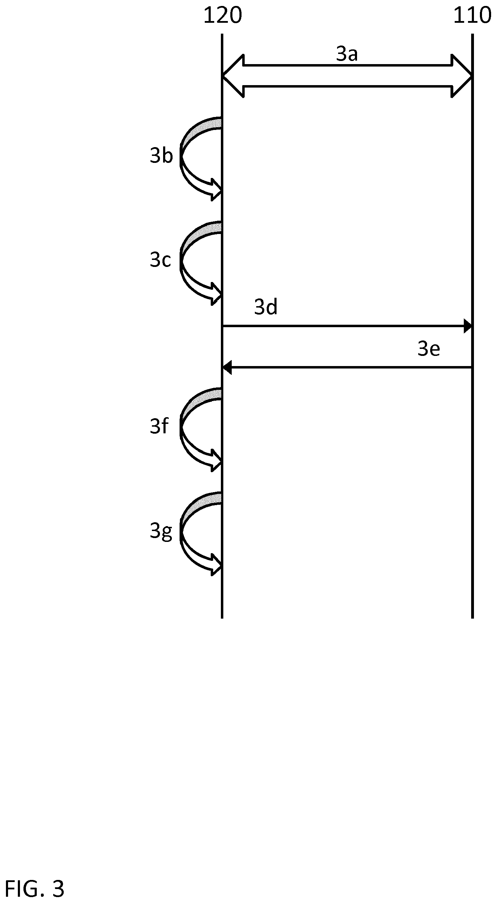

Figure 3 is a signalling diagram depicting a method of verifying data in accordance with some embodiments. The method may be employed in a data communication system 100 such as that depicted in Figure 1 and described above, which includes data verification provider server system 110 and user equipment 120 potentially comprising malware 125 that can communicate data via a first data communication channel 126.

At step 3a, the data verification provider server system 110 establishes a second data communication channel 129, separate from the first data communication channel, for communicating data with the user equipment 120.

At step 3b, the data verification provider server system 110 selects one or more algorithms to be used to derive output data from given input data for a given data verification request. The one or more algorithms are selected so as to vary between different data verification requests.

At step 3c, the data verification provider server system 110 associates the selected one or more algorithms with the given data verification request.

At step 3d, the data verification provider server system 110 transmits data identifying the selected one or more algorithms via the second data communication channel 129.

At step 3e, the data verification provider server system 110 receives output data via the second data communication channel 129.

At step 3f, the data verification provider server system 110 compares the received output data with expected output data for the given data verification request. The expected output data is determined using the selected one or more algorithms.

At step 3g, the data verification provider server system 110 determines a data verification result based at least partly on said comparing.

Various embodiments are described below that relate specifically to online transaction verification. It will be appreciated, however, that these embodiments are not intended to be limiting and should be considered to relate to possible implementations of more general data verification processing as described herein. The embodiments described below relate to the problem of preventing malware-related online transactional fraud in real-time.

Various embodiments described herein are indeed to address the transaction lifecycle vulnerability described above, while also allowing secure transaction verification to be performed on transaction-originating user equipment 120, even if the user equipment is infected, for example with malware 125. The data verification mechanisms described herein do not try to defeat the malware 125, but instead can operate within infected environments.

The verification process described herein introduces a new per-transaction-level polymorphic protection mechanism that augments the existing broader session-level protection mechanisms that are currently in use. This provides a verification system that may be both more intuitive and cost-effective than using, for example, digipasses and may avoid the need to have a separate operational mobile phone in order to transact online. It also helps to mitigate the risk of brand damage to the data processing organisations from enforcing the use of additional devices on their customer base.

The following assumptions are made, although it will be appreciated that not all need be valid:

- the user equipment 120 has anti-virus defences that may be compromised;
- the user equipment 120 has a browser and/or other application 127 which may be compromised along with its defences by malware 125;
- the Hypertext Transfer Protocol Secure (HTTPS) communications of the user equipment 120 via the first data communication channel 126 may be being intercepted by the malware 125 or otherwise;
- the first data communication channel 126 to the data processing organisation server system 130 itself may be being spoofed;
- the infrastructure of the data processing organisation server system 130 has not been compromised; and
- the Message-Digest algorithm, MD5, is no longer being used to sign any part of the data processing organisation server system 130's certificate chain because of its vulnerability to certificate forging.

These design considerations are embodied within a security architecture where the verification process itself morphs non-deterministically in real-time to form unique synergetic and interdependent relationships with individual transactions to be verified. This morphing behaviour reduces the likelihood that the verification machinery, such as the data verification software elements 128, used to verify a given transaction can be used surreptitiously or otherwise to subvert the verification process or used to verify other transactions, even with full access to the runtime code. Consequently, as the polymorphic verification process is transaction- and not session-centric, it may be repeatedly performed on even infected devices, as the required mutation of the verification process for verifying any given transaction is specific to that one transaction.

Using the polymorphic verification process, the user is presented with the actual transaction request received by the data processing organisation server system 130 for verification and the data processing organisation server system 130 receives the user's actual response to their transaction verification request.

The server-side data verification provider server system 110 associated with the data verification provider manages the infrastructure required to instantiate and support the verification process. The client-side data verification software element(s) 128 manage and perform the actual transaction verification with the transacting user on the same user equipment 120 the user used to issue the transaction request, even if the user equipment 120 is infected with the malware 125.

The verification process, in addition to using industry-standard encryption algorithms, is polymorphic. In other words, the client-side data verification software element(s) 128, the one or more algorithms and the encoding or encryption used for communications between the data verification software element(s) 128 and the data verification provider server system 110, morphs or varies across different transaction verification requests, for example in a non-deterministic manner.

Communications between the data verification software elements 128 and the data verification provider server system 110 are performed through a secure, out-of-band data channel, the second data communication channel 129, in encoded form and are tunnelled through a TLS-encrypted connection via the data communications network 140. The security protocols used are such that the encoding used by the transaction verification process instances is specific to those instances. Furthermore, as the data verification software element(s) 128 to be used for any given transaction request are downloaded on-demand per transaction, they cannot be tampered with on the user equipment 120, for example by the malware 125 or otherwise, beforehand.

In order to facilitate real-time on-demand verification, the data verification software element(s) 128 are both small in size, for example to allow sub-second download speeds over broadband, and also efficient to ensure negligible demand on resources on the user equipment 120. Furthermore to facilitate heterogeneous device compatibility, Java™ Applets may be used to interact with users transacting via browsers and a mobile Application Programming Interface (API) may be provided with a small digital footprint for a data processing organisation server system 130's mobile applications.

A more detailed explanation of the verification process will now be provided.

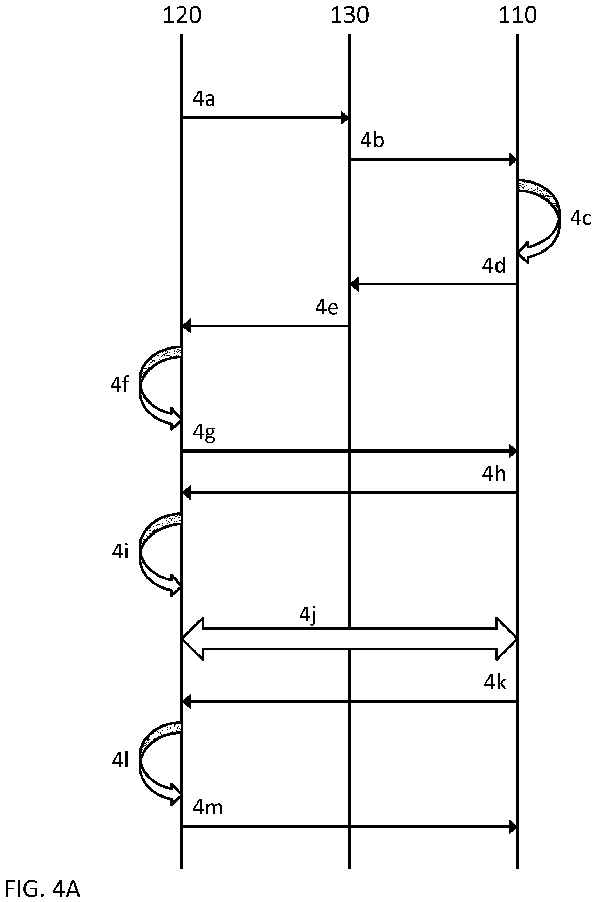

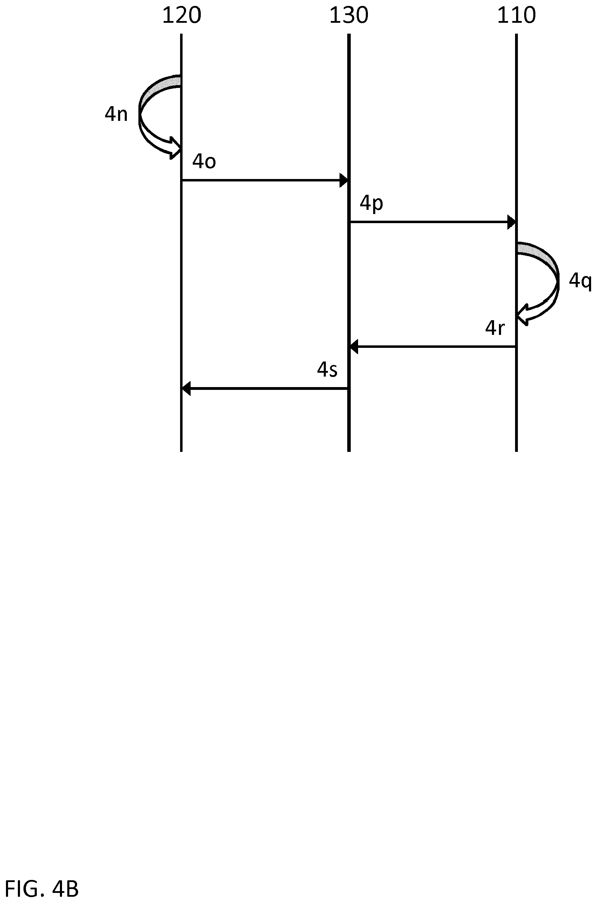

Figure 4 is a signalling diagram depicting a method of verifying data in accordance with some embodiments.

At step 4a, a transaction request is transmitted from the user equipment 120 to the data processing organisation server system 130 via the first data communication channel 126. It is not known whether or not the user equipment 120 is compromised and therefore whether or not the transaction request has been modified by malware on the user equipment 120.

At step 4b, the data processing organisation server system 130 transmits a transaction verification request relating to the user's transaction request to the data verification provider server system 110.

At step 4c, the data verification provider server system 110 receives the transaction verification request.

At step 4d, the data verification provider server system 110 a specific Transaction Verification Initiator (TVI) to the data processing organisation server system 130 to be incorporated into the data processing organisation server system 130's response to the user's transaction request.

At step 4e, the data processing organisation server system 130 transmits an initial response to the user's transaction request, along with the TVI, to the user equipment 120 via the first data communication channel 126.

At step 4f, the receiving of the data processing organisation server system 130's response along with the TVI triggers the transaction verification process for the user's transaction request with the user to be automatically initiated on the user equipment 120. If the user is transacting via a browser, the transaction verification request page includes a HTML-encoded TVI that triggers a signed Virtual Verification Device Loader (VVDL) to be downloaded. In this example, the VVDL is or loads the data verification software element(s) 128 described above. If the user is transacting via a mobile application, the TVI is send as encoded data that the mobile application simply passes to a mobile API which contains a bootstrap loader that downloads the VVDL 128.

At steps 4g and 4h, the user equipment 120 requests and then downloads the VVDL 128 from a network location associated with the data verification provider server system 110.

At step 4i, the VVDL 128 automatically installs in its own protected memory space and initiates the verification process for verifying the user's transaction request. Attempts to affect verification initiation by altering the TVI will invalidate its digital signature and verification will not be initiated. This renders such an attack both futile, and readily apparent to the user, as the user will not be able to approve the transaction. Attempts to appropriate and subvert the download and installation of the VVDL 128 are equally futile as the VVDL 128, the data to be verified, the encoding and verification process itself morphs or varies for each transaction request in a non-deterministic manner. Attempts to run the VVDL 128 within a completely spoofed environment in real-time, while impracticable, are theoretically possible and the data verification provider server system 110 detects this before attempting to verify the user's transaction request with the user using a Human Interaction Proof (HIP) test, as will be explained in more detail below.

At steps 4j and 4k, the VVDL 128 and the data verification provider server system 110 cooperate to establish the second data communication channel 129 and the data verification provider server system 110 transmits encoded data to be used to verify the transaction to the VVDL 128 via the second data communication channel 129.

At step 4l, the VVDL 128 performs various verification tests described in detail below and the user indicates their response to the data verification request.

At step 4m, the VVDL 128 transmits an encoded response to the data verification provider server system 110 via the second data communication channel 129.

At step 4n, in some embodiments, response data is displayed to the user of the user equipment 120 by the VVDL 128 in an unencoded form.

At step 4o, in some embodiments, the user enters the displayed response data via the user interface 124 into the legitimate software element(s) 128, which the user equipment 120 transmits to the data processing organisation server system 130 via the first data communication channel 126.

At step 4p, in some embodiments, the data processing organisation server system 130 transmits a request to the data verification provider server system 110 to request confirmation of the user's response, based on the response data received from the user equipment 120 at step 4o.

At step 4q, in some embodiments, a response verification module at the data verification provider server system 110 compares the response data received via the second data communication channel 129 with the encoded response data received from the data processing organisation server system 130.

In some embodiments, steps 4n to 4q need not be performed. For example, the data verification provider server system 110 may be able to determine the user's response to the data verification request based on the encoded data received via the second data communication channel at step 4m and may transmit the result of its determination to the data processing organisation server system 130 when it has determined the user's response.

At step 4r, the data verification provider server system 110 transmits the result of the comparison to the data processing organisation server system 130 such that the data processing organisation server system 130 can determine the user's actual response.

At step 4s, the data processing organisation server system 130 transmits an appropriate notification to the user equipment 120 to inform the user of the result of the verification process or takes a different action if appropriate.

In some embodiments, the verification process described herein is on-device and does not require the use of a separate physical verification devices such as security tokens as it creates and installs virtual verification devices on demand that use a three-factor polymorphic authenticity verification model, which will now be described in more detail, and includes the following sub-processes:

1. $\mathcal{F}^{PE}$: Proof of in session Execution (PSE);

2. $\mathcal{F}^{PH}$: Human Interaction Proof (HIP); and

3. $\mathcal{F}^{PV}$: Transaction Verification Proof (TVP).

The verification mechanism may be written mathematically as: $\forall\, \mathbb{U}^{TR}\,\exists\, R^{TV} \in \{r \subseteq R : [\mathbb{P}((\mathcal{F}^{PV}(\phi^{PV}) \leftarrow \mathcal{F}^{PH}(\phi^{PH}) \leftarrow \mathcal{F}^{PE}(\phi^{PE}))]^{\Phi(TR)}\}$, where $\mathbb{U}^{TR}$ is a user transaction request, "$\leftarrow$" represents a dependency relationship and $\mathcal{F}$ represents a functional proof P from the set {PE,PH,PV} that requires the correct response key from a difficult-to-factor polynomial function $\phi^{P}$ such that $\phi^{P}$ belongs to set $\Phi^{TR} = \{\phi^{PE}, \phi^{PH}, \phi^{PV}\}$ that is randomly chosen from a set $\{\phi^{1}, ..., \phi^{n}\}$ where n is large and where $\Phi^{TR}$ is bound to the transaction request being verified (TR).

In other words, for all transaction verification requests, there exists a transaction verification result ($R^{TV}$) in the set of all possible results, R, for which the functional proposition $\mathbb{P}=((\mathcal{F}^{PV}(\phi^{PV}) \leftarrow \mathcal{F}^{PH}(\phi^{PH}) \leftarrow \mathcal{F}^{PE}(\phi^{PE}))$ holds true for the transaction request being verified. The verification process therefore can be seen to be polymorphic with respect to $\mathbb{P}$. . Thus, for each transaction request received by a data processing organisation server system 130, only the user, $\mathbb{U}$, can verify the user's transaction request, $\mathbb{U}^{TR}$, to be correct or the verification will fail. When a user's transaction request is injected into the data verification provider server system 110, a pre-processed Verification Control Data (VCD) unit is selected at random by the data verification provider server system 110 and is bound to the user's transaction request. The selected VCD is used both to control the verification process for that user's transaction request and to uniquely identify the user's transaction request within the data verification provider server system 110, such that the relationship between the data verification provider server system 110 and the user's transaction request cannot be predetermined and used as an attack vector.

Although various implementation-specific performance enhancements may be made, various embodiments will now be described by way of example only, that can be used to perform data verification in a non-consistent manner.

Various steps are set out below to illustrate a way of performing a proof of in-session execution test in accordance with some embodiments.

The data verification provider server system 110 uses the verification control data to generate the TVI for the user's transaction request. The data processing organisation server system 130 sends the TVI to the user equipment 120 via the first data communication channel 126. The TVI is encoded appropriately for the user equipment 120.

Initiation of the verification process for a given transaction request is then either triggered automatically by the browser 127 (if the user is transacting via the browser) in response to receiving a transaction verification request page from the data processing organisation server system 130 or by the mobile application 127 used to submit the user's transaction request (if the user is transacting via a mobile application).

Attempts to prevent verification initiation by interfering with either the browser or the mobile application 127, which are both outside the control of the data verification provider server system 110, is both futile and apparent. If the verification process is not initiated, the user will be immediately aware that something is amiss because the user will not be able to approve the transaction. The TVI causes the VVDL 128 assigned to this transaction request to be downloaded from the data processing organisation server system 130 over its existing HTTPS session connection with the user equipment 120. As this HTTPS connection may be compromised, only virtual verification device loader initiation data is sent via this connection.

In more detail, the TVI includes some or all of the following:

- a Transaction Identifier, TI, for this transaction request, where TI is non-repeating and based on a cryptographically secure pseudo-random number generated (CSPRNG) number used only once (nonce);
- a URL for the VVDL 128, where the VVDL 128 assigned to this transaction request is $L^{TR} \in \{L^1, ..., L^n\}$; and
- a set, $DH^{TR}$, of Diffie-Hellman parameters for the transaction request, where $DH^{TR} \in \{DH^1, ..., DH^n\}$ and where $DH^{TR}$ includes:

  ○ the public modulo prime, p, for this Diffie-Hellman key exchange - DH-p;
  ○ the public base generator, g, for this Diffie-Hellman key exchange - DH-g; and
  ○ the key length, DH-1, for this Diffie-Hellman key exchange, which conforms to restrictions on encryption key strength in the jurisdiction associated with the user's transaction request.

The public modulo prime and the public base generator are public (as opposed to being private) and may be re-used, shared or known across a large population without compromise to the security of a Diffie-Hellman key exchange that uses them. Furthermore, as only values for both the public modulo prime and the public base generator with high computational time complexity are used, the data verification provider server system 110 holds pre-computed {p, g} sets that are randomly assigned to the user's transaction request space at runtime.

The VVDL 128 incorporates $\mathcal{F}^{\mathrm{PE}}$ and $\phi^{\mathrm{PE}}$ for this user's transaction request, which it uses to generate a result $\mathcal{R}^{\mathrm{PE}}$ as a proof of in-session execution (PSE) as follows.

The VVDL 128 is loaded and, after performing some environment checks, it runs $\mathcal{F}^{\mathrm{PE}}$ to compute $\mathcal{R}^{\mathrm{PE}}$ using polynomial function $\phi^{\mathrm{PE}}$ chosen at random from the set $\{\phi^1, ..., \phi^n\}$ such that $\mathcal{R}^{\mathrm{PE}} := \mathrm{HMAC(M,K)},$ where M := SHA-2(TI,DH-p) and K :=$\phi^{\mathrm{PE}}$(TI, DH-p, DH-g).

The VVDL 128 then establishes an out-of-band HTTPS session with the data verification provider server system 110 and checks the authenticity of the connection by checking the returned certificate to prevent host address spoofing. If the certificate is invalid, verification is aborted. HTTPS is not used to establish a secure connection, but only to ensure the authenticity of the connection as it is assumed that data over the HTTPS connection is being intercepted.

The VVDL 128 sends [[TI, LPK,DS(LPK, $\mathcal{R}^{\mathrm{PE}}$ )] to the data verification provider server system 110, where LPK is the VVDL 128 public key. This includes the $\mathcal{R}^{\mathrm{PE}}$ and LPK are digitally signed using that LPK's matching private key to prevent a man-in-the-middle attack.

The data verification provider server system 110 checks the authenticity of LPK and that $\mathcal{RPE}$ is correct; in other words it compares the received result of the in-session executing test with an expected result of the in-session executing test. If both checks pass, data verification provider server system 110 activates the verification session unless a verification session for this transaction request has already been activated. If a verification session for this transaction request has already been activated, the entire verification session is aborted and the data processing organisation is informed of the failed attempt by the malware 125 on the user equipment 120 to spoof the verification process for the user's transaction request.

If the checks pass, then the VVDL 128 must be running in session and the session is using the correct VVDL 128 based on the fact that the transaction identifier, TI, cannot be predetermined, is specific to this user's transaction request and was needed to compute $\mathcal{R}^{\mathrm{PE}}$ .

However, $\mathcal{R}^{\mathrm{PE}}$ being correct only attests to the fact that the VVDL 128 is running within the active user's transaction request session. This does not, in itself, allow a determination to be made as to whether the VVDL 128 is being run, or intercepted, by MitB or MitMo malware 125 attempting to spoof this transaction verification.

If this verification process for the user's transaction request is being spoofed by malware, then the spoofing attack will fail the Human Interaction Proof (HIP) test which the data verification provider server system 110 commences next. The HIP test function $\mathcal{F}^{\mathrm{PH}}$ can be configured to integrate with or support a data processing organisation's HIP test of choice, such as OTP and password character challenge and response. However, in some embodiments, the data verification provider server system 110 has a CAPTCHA processor that may be used to provide the HIP test. This is at least as secure as OTP and does not require a separate OTP device and is substantially more secure than password challenge/response variants that are readily and easily broken.

Various steps are set out below to illustrate a way of performing a human interaction proof test in accordance with some embodiments.

If $\mathcal{R}^{\mathrm{PE}}$ is correct, the data verification provider server system 110 sends the VVDL 128 the data block: [A=[EPK]], B=[DS(EPK, mSSK, eData)]]$^{\mathrm{PH}}$, where EPK, mSSK and eData are digitally signed using the data verification provider server system 110's private key matching its public key, EPK.

EPK is the data verification provider server system 110's public key for this Diffie-Hellman exchange that VVDL 128 uses to compute their shared secret key, SSK. SSK is known only to VVDL 128 and to the data verification provider server system 110.

Moreover, the SSK can only be known to VVDL 128, at the user equipment 120, even if the VVDL 128 itself has been hijacked in a complex way by malware. Despite such a hijack being theoretically complex and very difficult to achieve in real-time, it is assumed that this might be possible and will be determined next. The computed SSK however, regardless of such an attack, is still secure and safe to use.

mSSK is the mutation value, required by $\mathcal{F}^{\mathrm{PE}}$ to morph the shared secret key, SSK, to a master key K* known to the data verification provider server system 110 such that SSK $\oplus$ mSSK $\rightarrow$ K*, which seeds the key generator used to secure further communications and to decrypt eData. This operation does not weaken the security guarantees of the shared secret key, but simply morphs the shared secret key to an alternative secret key K* with the help of Diffie-Hellman key exchange, where K* was established using a CSPRNG associated with the verification control data associated with this transaction request.

eData, when decoded, contains [TKN1, $\mathcal{F}^{\mathrm{PH}}$, , HDS] where TKN1 is a nonce token and $\phi^{\mathrm{PE}}$ is required to compute $\mathcal{R}^{\mathrm{PH}}$.

HDS is the HIP test data set $\{\{HC_1, SV_1\}, ..., \{HC_n, SV_n\}\}$. HC is a HIP CAPTCHA and SV is its matched shadow value such that the result, $\mathcal{R}^{\mathrm{PH}}$, of $\mathcal{F}^{\mathrm{PH}}(\phi^{\mathrm{PE}}(\mathrm{TI, HC\text{-}v, SV}))$ is sent to the data verification provider server system 110, where HC-v is the entered value for HC.

The shadow values, SV, prevent the known value cryptanalysis attack on the encrypted data stream. Each $HDS \in \{HDS_1, ..., HDS_n\}$ and the images of the contained HIP CAPTCHA are non-repeating and are based on CSPRNG nonces.

The background image of each HIP CAPTCHA is imprinted using random data to prevent the known patterns cryptanalysis attack on the encrypted data stream. The anti-cryptanalysis shadow value feature is based on one-time-pads which are proven to be unbreakable if implemented correctly.

Based on the non-repeating, temporal nature of each verification process instance together with the industry-standard encryption algorithms used, it is theoretically unfeasible to break the second data communication channel 129 established between the user equipment 120 and the data verification provider server system 110 when based on strong encryption keys. However, since the user equipment 120 may be operating in a region that enforces the use of weak encryption keys only, the anti-cryptanalysis measures are warranted despite it still be theoretically unfeasible to break a low key-strength second data communication channel 129 between the user equipment 120 and the data verification provider server system 110 because of its temporal nature.

The digital signature, DS, contained in the data block, is computed using a cryptographically secure, one-way function that is collision resistant; such as SHA-2.

If a data integrity function $\mathcal{F}_{\mathrm{D}}^{\mathrm{PH}}(\mathrm{A, B})$ fails, the verification process aborts gracefully, informs the data processing organisation server system 130 of the failure and takes any remedial action as dictated by the data processing organisation server system 130; for example restarting the verification mechanism using new verification control data.

The VVDL 128 challenges the user to the HIP test, which must be completed in a finite time and sends the encrypted block [TI, TKN1, $\mathcal{R}^{\mathrm{PH}}$] to the between the user equipment 120 and the data verification provider server system 110 via its secure out-of-band data channel.

Even if the VVDL 128 is operating in an MitB or MitMO malware infected environment, the malware will not only have now failed the HIP test, but it will also not be able to read or manipulate the data transmissions between the VVDL 128 and the between the user equipment 120 and the data verification provider server system 110 because the encrypted data channel's end-point is contained within the VVDL 128 itself and not within, for example, the browser 127 which would cause the security vulnerability exploited by MitB malware.

Consequently, the one or more malicious software elements 125 are now unable to decrypt this data communication channel, any MitB attack is rendered ineffectual. If $\mathcal{R}^{PH}$ is correct, the data verification provider server system 110 can proceed to verify the transaction request in question. In the event that the HIP test fails to be completed successfully, the transaction verification process is immediately but gracefully aborted and the data processing organisation server system 130 is notified so that it can information the user appropriately.

Various steps are set out below to illustrate a way of performing a transaction verification test in accordance with some embodiments. Several variants for transaction verification proof are supported to ensure that the data verification provider server system 110 can interact with the user in keeping with the data processing organisation server system 130's branding and customer experience policies.

Transaction verification proof may be considered to be a three-step process: P → C → R, where P is the presentation stage in which the transaction request received by the data processing organisation server system 130 is presented to the user on the user device 120 via the user interface 124, C is the capture stage in which the user's response to the verification request is captured by the VVDL 128 via the user interface 124 and R is the result stage in which the encoded response is sent back to the data verification provider server system 110 for processing.

If TKN1 and $\mathcal{R}^{PH}$ (which the data verification provider server system 110 received following the HIP test) are correct against TI, the data verification provider server system 110 sends the data block $[A=[TKN2, \mathcal{F}^{PV}, eTRD],$ B=[hCheck]]$^{PV}$ to the VVDL 128 over their secure channel. $\mathcal{F}^{PV}$ handles the presentation and capture stages appropriately, $\mathcal{F}^{PV}(\phi^R)$ generates the result, R, and $\mathcal{F}^{PV}(\phi^K(TI,TKN1,TKN2)$ generates the key, $K^{PV}$, needed to decrypt the eTRD to produce TRD, where TRD contains the transaction verification data required by $\mathcal{F}^{PV}$.

Given the above, the transaction verification proof for a given user's transaction request may be generalised as following the following steps.

$K^{PV}$ is derived by: $K^{PV} \leftarrow \mathcal{F}^{PV}(\phi^K(TI,TKN1, TKN2))$.

TRD is derived by: $TRD \leftarrow \mathcal{F}^{PV}(TI, eTRD, K^{PV})$.

If the hash comparison function $\mathcal{F}_H^{PV}(A, B)$ fails, the block is requested again and if the test fails a second time, the verification process aborts gracefully, informs the data processing organisation server system 130 and takes any remedial action as dictated by the data processing organisation server system 130 such as restarting the verification mechanism using new verification control data.

The user's response, R, is derived by: $R \leftarrow \mathcal{F}^{PV}(TRD)$.

TRD may be image or value data.

The data verification provider server system 110 has a secure image rendering engine which may be used if the data processing organisation server system 130 wishes to present the transaction request details it has received from the user as an image. The rendering engine combines a background image, BG, with the transactional data and a date and/or time stamp. The background image, BG, is chosen from a replenished set {BG$_1$, ..., BG$_n$} of branded images that all look the same to the user but are imprinted with non-visible random data (noise) using steganography to obfuscate the image bit pattern.

If TRD is value data then TRD is rendered with the data processing organisation server system 130's template of choice and is known to the VVDL 128 in a manner determined by $\mathcal{F}^{PV}$ to perform the presentation and capture stages, where the determination of the presentation and capture stages are encoded into the given $\mathcal{F}^{PV}$.

The user's response, R, is determined either by a HIP operation such as CAPTCHA, OTP or the like, or via runtime-generated confirm and reject buttons as per the data processing organisation server system 130's requirements. If button generation is used, the buttons are encoded with response or confirm codes that are supplied in the eTRD, that are specific to the user's transaction request and that are used by $\phi^R$.

The result of the transaction verification test, $R^{PV}$, is derived by: $R^{PV} \leftarrow \mathcal{F}^{PV}(\phi^R(TI, HMAC((TI,TRD),R), TKN2)$.

The VVDL 128 then sends the data block [TI, TKN2, $R^{PV}$] to the data verification provider server system 110.

The user is redirected as appropriate depending on the user's response, R.

To prevent response spoofing, the output from each verification step is also transaction request specific, varies between different requests and is encrypted directly within the data verification software element(s) 128 based on runtime-generated Diffie-Hellman secret keys known only to the data verification software element(s) 128 and the data verification provider server system 110, before being transmitted over the TLS-encrypted second data communication channel. Furthermore, all secret keys are generated within protected memory and held in opaque form.

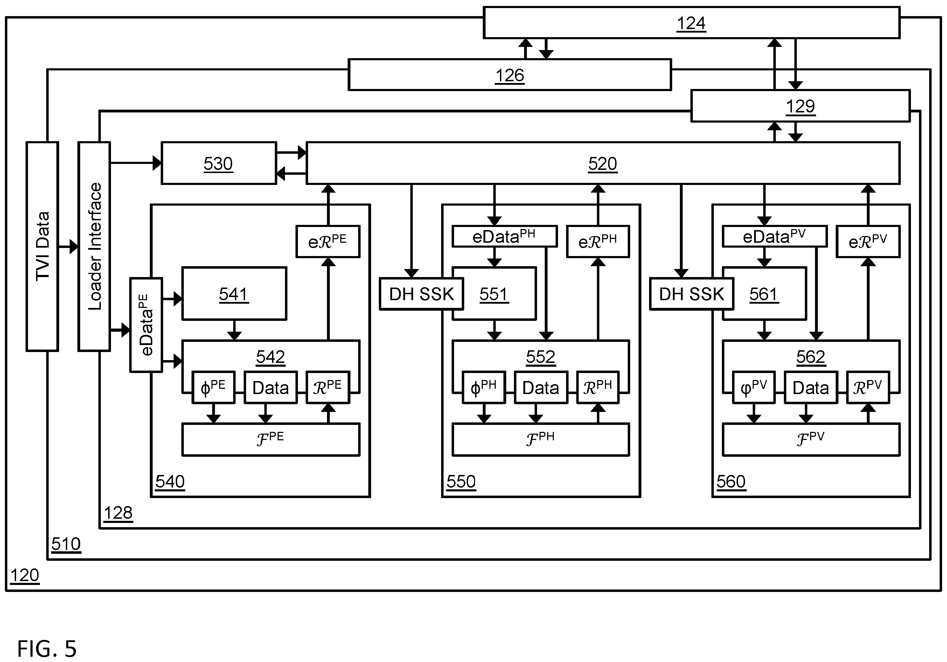

Figure 5 is a schematic representation of user equipment in accordance with some embodiments. The user equipment may be used to verify data in accordance with some embodiments.

The user equipment 120 includes a network interface 124 which enables the user equipment 120 to communicate via the data communications network 140.

The user equipment 120 establishes a first data communication channel 126 with the data processing organisation server system 130 via which it receives Transaction Verification Initiation (TVI) data.

The user equipment 120 uses the TVI data to download a VVDL 410.

The VVDL 510 loads the virtual verification device 128.

The virtual verification device 128 includes a $\mathbb{U}^{\mathrm{TR}}$ verification process controller 520 which is used to control the verification process on the user equipment 120. The $\mathbb{U}^{\mathrm{TR}}$ verification process controller 520 cooperates with a DH key exchange module 530 and the data verification provider server system 110 to establish the second data communication channel 129 between the user equipment 120 and the data verification provider server system 110.

The VVDL 510 also includes encoded data, eData$^{\mathrm{PE}}$, to be used by an in-session execution verifier module 540 to perform a PSE test. The in-session execution verifier module 540 includes a key generator engine 541 that identifies the key required to decode the encoded data eData$^{\mathrm{PE}}$ and passes the key to an encoding/decoding module 542 that decodes the encoded data eData$^{\mathrm{PE}}$ using the key. The decoded data comprises $\phi^{\mathrm{PE}}$ and other data which are used to derive a result of the PSE test, $\mathcal{R}^{\mathrm{PE}}$, using $\mathcal{F}^{\mathrm{PE}}$. The result of the PSE test $\mathcal{R}^{\mathrm{PE}}$ is encoded by the encoding/decoding module 542 to produce an encoded result of the PSE test, $e\mathcal{R}^{\mathrm{PE}}$, which is passed by the in-session execution verifier module 540 to the $\mathbb{U}^{\mathrm{TR}}$ verification process controller 520. The $\mathbb{U}^{\mathrm{TR}}$ verification process controller 420 then transmits the encoded result of the PSE test, $e\mathcal{R}^{\mathrm{PE}}$, to the data verification provider server system 110 via the second data communication channel 129.

The virtual verification device 128 also includes a HIP verifier module 550 which performs HIP tests. The HIP verifier module 550 includes a key generator engine 551 that identifies the key required to decode the encoded data eData$^{\mathrm{PH}}$ using both the encoded data eData$^{\mathrm{PH}}$ and the DH SSK and passes the key to an encoding/decoding module 552 that decodes the encoded data eData$^{\mathrm{PH}}$ using the key. The decoded data comprises $\phi^{\mathrm{PH}}$ and other data which are used to derive a result of the HIP test, $\mathcal{R}^{\mathrm{PH}}$, using the $\mathcal{F}^{\mathrm{PH}}$. The result of the HIP test $\mathcal{R}^{\mathrm{PH}}$ is encoded by the encoding/decoding module 552 to produce an encoded result of the HIP test, $e\mathcal{R}^{\mathrm{PE}}$, which is passed by the HIP verifier module 550 to the $\mathbb{U}^{\mathrm{TR}}$ verification process controller 520. The $\mathbb{U}^{\mathrm{TR}}$ verification process controller 520 then transmits the encoded result of the HIP test, $e\mathcal{R}^{\mathrm{PE}}$, to the data verification provider server system 110 via the second data communication channel 129.

The virtual verification device 128 also includes a transaction request module 560 which performs transaction verification tests. The transaction request module 560 includes a key generator engine 561 that identifies the key required to decode the encoded data eData$^{\mathrm{PV}}$ using both the encoded data eData$^{\mathrm{PV}}$ and the DH SSK and passes the key to an encoding/decoding module 562 that decodes the encoded data eData$^{\mathrm{PV}}$ using the key. The decoded data comprises $\phi^{\mathrm{PV}}$ and other data which are used to derive a result of the transaction verification test, $\mathcal{R}^{\mathrm{PV}}$, using the $\mathcal{F}^{\mathrm{PV}}$. The result of the transaction verification test $\mathcal{R}^{\mathrm{PV}}$ is encoded by the encoding/decoding module 562 to produce an encoded result of the transaction verification test, $e\mathcal{R}^{\mathrm{PV}}$, which is passed by the transaction verification module 560 to the $\mathbb{U}^{\mathrm{TR}}$ verification process controller 520. The $\mathbb{U}^{\mathrm{TR}}$ verification process controller 520 then transmits the encoded result of the transaction verification test, $e\mathcal{R}^{\mathrm{PV}}$, to the data verification provider server system 110 via the second data communication channel 129.

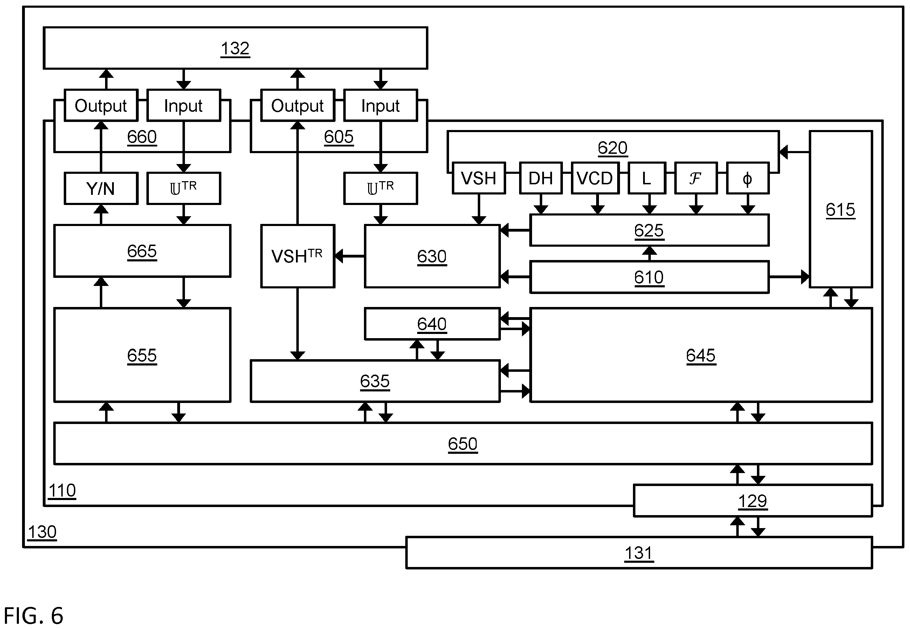

Figure 6 is a schematic representation of data verification provider server system 110 in accordance with some embodiments. The data verification provider server system 110 may be used to verify data in accordance with some embodiments.

In Figure 6, the data verification provider server system 110 is depicted in combination with relevant parts of the data processing organisation server system 130, showing the interaction between the data verification provider server system 110 and the data processing organisation server system 130. As explained above in relation to Figure 4, the data verification provider server system 110 also interacts with the user equipment 120 to perform data verification.

The data processing organisation server system 130 has a network interface 131 via which it communicates with the data verification provider server system 110. The data processing organisation server system 130 also includes a transaction verification business process engine 132 which is used to inject transaction verification requests into the data verification provider server system 110.

The data verification provider server system 110 includes an injector module 605 which receives user transaction requests from the data processing organisation server system 130.

The data verification provider server system 110 includes a random data generator engine 610 which can be used to generate data, such as algorithms, in a non-deterministic manner. The random data generator engine 610 passes such data to a data verification software element generator engine 615, which passes data verification software element data to a data verification software element pool module 620. The a data verification software element pool module 520 stores sets of DH parameters, VCD, L, $\mathcal{F}$, and $\phi$ and passes these items to a VCD pre-processor module 625 that generates VCD to be used in the transaction verification process.

The VCD pre-processor module 625 passes VCD to a verification session handler (VSH) to $\mathbb{U}^{\text{TR}}$ binding engine 630 that binds verification sessions to user transaction requests. The VSH to $\mathbb{U}^{\text{TR}}$ binding engine 630 generates a VSH for a given transaction request and passes the generated VSH to the injector module 605 which then passes the VSH$^{\text{TR}}$ to the data processing organisation 130 for communication to the user equipment 120 via the first data communication channel 126.

The VSH to $\mathbb{U}^{\text{TR}}$ binding engine 630 also passes the generated VSH to verification session manager 635 which handles the verification session at the data verification provider server system 110.

The verification session manager 635 communicates with a VSH persistence engine 640 to ensure that the correct VSH is being used in relation to a given transaction, with an enterprise integration services module 645 which enables the data verification provider server system 110 to facilitate integration with the data processing organisation, and with a verification controller 650 which is responsible for controlling the verification process in cooperation with the user equipment 120 via the second data communication channel 129. The verification controller 650 is controlled by a verification CPU 655.

The data verification provider server system 110 includes a query module 660 which receives a query in relation to a given user transaction request from the data processing organisation server system 130. The query is handled by a verification response comparator 665 which is also controlled by the verification CPU 655. Depending on the comparison by the verification response comparator 665, a response to the query is communicated to the data processing organisation server system 130 via the query module 660.

Embodiments described herein relate to an online transaction verification process. The transaction verification process creates a virtual, out-of-band one-time-use transaction verification device at runtime within a physical user device that can be used to perform transaction verification securely in real time. The likelihood of real-time malware-related online transactional fraud may thus be reduced. The transaction verification process has been designed to operate successfully even on severely infected user devices.

The above embodiments are to be understood as illustrative examples of the invention. Further embodiments of the invention are envisaged.

For example, embodiments have been described above in which a three-factor polymorphic authenticity verification model is used. It will be appreciated, however, that a different number of tests could be used to provide a multi-factor polymorphic authenticity verification model. Additionally, at least some of the tests used in the multi-factor polymorphic authenticity verification model may be different to the tests described in detail above.

Although the data processing organisation server system 130 and the data verification provider server system 110 have been described above in some embodiments as separate entities, it will be appreciated that they may be combined to form a single logical entity that provides, for example, both transaction processing and transaction verification for users.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**EP 3 252 636 A1**

The following numbered clauses on pages 52 to 63 of the present description correspond to the claims of PCT patent application no. PCT/GB2013/050640 as filed. European patent application no. 13717810.9, from which the present application is divided, derives from the above-mentioned PCT patent application. The claims of the present application as filed can be found on the subsequent pages 64 to 68 of the specification which begin with the heading "CLAIMS".

1. A method of verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the data verification provider server system;
receiving, via the second data communication channel, data identifying one or more algorithms to be used to derive output data from given input data, the one or more algorithms being associated with a given data verification request from the data verification provider server system and varying between different data verification requests from the data verification provider server system;
using the one or more algorithms and received input data to derive output data; and
transmitting the output data derived using the one or more algorithms via the second data communication channel, whereby the data verification provider server system may compare the derived output data with expected output data for the given data verification request to determine a data verification result.

2. A method according to claim 1, wherein the one or more algorithms vary non-deterministically between different data verification requests from the data verification provider server system.

3. A method according to claim 1 or 2, comprising:

selecting one or more locations in memory at which to store the one or more algorithms, at least some of the one or more locations being selected so as to vary between different data verification requests from the data verification provider server system; and
storing the one or more algorithms in the selected one or more locations in memory.

4. A method according to any preceding claim, comprising:

selecting one or more decoy algorithms to be stored along with the one or more algorithms in memory; and
storing the one or more algorithms and the selected one or more decoy algorithms in the memory.

5. A method according to any preceding claim, comprising storing the one or more algorithms in protected memory at the communication device.

6. A method according to any preceding claim, comprising receiving data to be verified via the second data communication channel.

7. A method according to any preceding claim, comprising identifying data to be verified to a user via a user interface.

8. A method according to any preceding claim, comprising receiving user input via a user interface, the user input corresponding to a data verification response from a user.

9. A method according to claim 8, comprising using at least the received user input as input data for the one or more algorithms.

10. A method according to any preceding claim, comprising using at least some data to be verified as input data for the one or more algorithms

11. A method according to any preceding claim, comprising establishing the second data communication channel using a shared secret key.

12. A method according to claim 11, comprising generating the shared secret key in cooperation with the data verification provider server system as part of an establishment procedure for establishing the second data communication channel.

13. A method according to any preceding claim, comprising:

receiving one or more data verification software elements from a remote source via a data communication network; and
using the one or more data verification software elements to perform data verification.

14. A method according to claim 13, comprising receiving at least part of the one or more data verification software elements, or data identifying a remote location at which the one or more data verification software elements are retrievable, via the first data communication channel.

15. A method according to claim 13 or 14, comprising receiving at least part of the one or more data verification software elements, or data identifying a remote location at which the one or more data verification software elements are retrievable, via the second data communication channel.

16. A method according to any of claims 13 to 15, wherein the one or more data verification software elements are selected to vary between different data verification requests from the data verification provider server system.

17. A method according to any of claims 13 to 16, comprising:

identifying one or more locations in memory at which to store the one or more data verification software elements, at least some of the one or more locations varying between different data verification requests from the data verification provider server system; and
storing the one or more data verification software elements in the identified one or more locations in memory.

18. A method according to any preceding claim, comprising:

receiving, via the second data communication channel, data identifying one or more further algorithms to be used to derive output data from given input data, the one or more further algorithms being associated with the given data verification request from the data verification provider server system and varying between different data verification requests from the data verification provider server system;
using the one or more further algorithms and received input data to derive further output data; and
transmitting the further output data via the second data communication channel, whereby the data verification provider server system may compare the derived further output data with expected further output data for the given data verification request to determine a data verification result.

19. User equipment for verifying data in a data communication system, the data communication system comprising:

a data verification provider server system,
the user equipment potentially comprising one or more malicious software elements that can communicate data via a first data communication channel, wherein the user equipment comprises:

one or more processors operable to establish a second data communication channel, separate from the first data communication channel, for communicating data with the data verification provider server system;
one or more receivers operable to receive, via the second data communication channel, data identifying one or more algorithms to be used to derive output data from given input data, the one or more algorithms being associated with a given data verification request from the data verification provider server system and varying between different data verification requests from the data verification provider server system;
one or more processors operable to use the one or more algorithms and received input data to derive output data; and
one or more transmitters operable to transmit the output data derived using the one or more algorithms via the second data communication channel, whereby the data verification provider server system may compare the derived output data with expected output data for the given data verification request to determine a data verification result.

20. Computer software adapted to perform a method of verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the data verification provider server system;
receiving, via the second data communication channel, data identifying one or more algorithms to be used to derive output data from given input data, the one or more algorithms being associated with a given data verification request from the data verification provider server system and varying between different data verification requests from the data verification provider server system;
using the one or more algorithms and received input data to derive output data; and
transmitting the output data derived using the one or more algorithms via the second data communication channel, whereby the data verification provider server system may compare the derived output data with expected output data for the given data verification request to determine a data verification result.

21. A computer program product comprising a non-transitory computerreadable storage medium having computer readable instructions stored thereon, the computer readable instructions being executable by a computerised device to cause the computerised device to perform a method for verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the data verification provider server system;
receiving, via the second data communication channel, data identifying one or more algorithms to be used to derive output data from given input data, the one or more algorithms being associated with a given data verification request from the data verification provider server system and varying between different data verification requests from the data verification provider server system;
using the one or more algorithms and received input data to derive output data; and
transmitting the output data derived using the one or more algorithms via the second data communication channel, whereby the data verification provider server system may compare the derived output data with expected output data for the given data verification request to determine a data verification result.

22. A method of verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the user equipment;
selecting one or more algorithms to be used to derive output data from given input data for a given data verification request, the one or more algorithms being selected so as to vary between different data verification requests;
associating the selected one or more algorithms with the given data verification request;
transmitting data identifying the selected one or more algorithms via the second data communication channel;
receiving output data via the second data communication channel;
comparing the received output data with expected output data for the given data verification request, the expected output data being determined using the selected one or more algorithms; and

determining a data verification result based at least partly on said comparing.

23. A method according to claim 22, comprising selecting the one or more algorithms non-deterministically for the given data verification request.

24. A method according to claim 22 or 23, comprising transmitting data via the second data communication channel to instruct the user equipment to select one or more locations in memory at which to store the one or more algorithms, at least some of the one or more locations being selected so as to vary between different data verification requests from the data verification provider server system, whereby the user equipment may store the one or more algorithms in the selected one or more locations in memory.

25. A method according to any of claims 22 to 24, comprising transmitting data via the second data communication channel to instruct the user equipment to select one or more decoy algorithms to be stored along with the one or more algorithms in memory, whereby the user equipment may store the one or more algorithms and the selected one or more decoy algorithms in the memory.

26. A method according to any of claims 22 to 25, comprising transmitting data to be verified via the second data communication channel.

27. A method according to any of claims 22 to 26, comprising transmitting data via the second data communication channel to instruct the user equipment to identify data to be verified to a user via a user interface.

28. A method according to any of claims 22 to 27, comprising establishing the second data communication channel using a shared secret key.

29. A method according to claim 28, comprising generating the shared secret key in cooperation with the user equipment as part of an establishment procedure for establishing the second data communication channel.

30. A method according to any of claims 22 to 29, comprising transmitting at least part of one or more data verification software elements such that at least part of the one or more data verification software elements, or data identifying a remote location at which the at least part of the one or more data verification software elements are retrievable, is transmittable to the user equipment via the first data communication channel, the one or more data verification software elements being useable by the user equipment to perform data verification.

31. A method according to any of claims 22 to 30, comprising transmitting at least part of one or more data verification software elements via the second data communication channel, the one or more data verification software elements being useable by the user equipment to perform data verification.

32. A method according to claim 30 or 31, comprising selecting the one or more data verification software elements to be used in relation to the given data verification request, data verification software elements being selected so as to vary between different data verification requests.

33. A method according to any of claims 30 to 32, comprising transmitting data via the second data communication channel to instruct the user equipment to select one or more locations in memory at which to store the at least part of the one or more data verification software elements, at least some of the one or more locations being selected so as to vary between different data verification requests.

34. A method according to any of claims 22 to 33, comprising:

selecting one or more further algorithms to be used to derive output data from given input data for the given data verification request, the one or more further algorithms being selected so as to vary between different data verification requests;
associating the selected one or more further algorithms with the given data verification request;
transmitting data identifying the selected one or more further algorithms via the second data communication channel;
receiving output data via the second data communication channel;
comparing the received output data with further expected output data for the given data verification request, the further expected output data being determined using the selected one or more further algorithms; and

determining a data verification result based at least partly on said comparing.

35. A data verification provider server system for verifying data in a data communication system, the data communication system comprising:

user equipment potentially comprising one or more malicious software elements that can communicate data via a first data communication channel,
the data verification provider server system comprising:

one or more processors operable to establish a second data communication channel, separate from the first data communication channel, for communicating data with the user equipment;
one or more processors operable to select one or more algorithms to be used to derive output data from given input data for a given data verification request, the one or more algorithms being selected so as to vary between different data verification requests;
one or more processors operable to associate the selected one or more algorithms with the given data verification request;
one or more transmitters operable to transmitting data identifying the selected one or more algorithms via the second data communication channel;
one or more receivers operable to output data via the second data communication channel;
one or more processors operable to compare the received output data with expected output data for the given data verification request, the expected output data being determined using the selected one or more algorithms; and
one or more processors operable to determine a data verification result based at least partly on said comparing.

36. Computer software adapted to perform a method of verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the user equipment;
selecting one or more algorithms to be used to derive output data from given input data for a given data verification request, the one or more algorithms being selected so as to vary between different data verification requests;
associating the selected one or more algorithms with the given data verification request;
transmitting data identifying the selected one or more algorithms via the second data communication channel;
receiving output data via the second data communication channel;
comparing the received output data with expected output data for the given data verification request, the expected output data being determined using the selected one or more algorithms; and
determining a data verification result based at least partly on said comparing.

37. A computer program product comprising a non-transitory computerreadable storage medium having computer readable instructions stored thereon, the computer readable instructions being executable by a computerised device to cause the computerised device to perform a method of verifying data in a data communication system, the data communication system comprising:

a data verification provider server system; and
user equipment potentially comprising one or more malicious software elements that can communicate data via a first data communication channel,
the method comprising:

establishing a second data communication channel, separate from the first data communication channel, for communicating data with the user equipment;

selecting one or more algorithms to be used to derive output data from given input data for a given data verification request, the one or more algorithms being selected so as to vary between different data verification requests;

associating the selected one or more algorithms with the given data verification request;

transmitting data identifying the selected one or more algorithms via the second data communication channel;

receiving output data via the second data communication channel;

comparing the received output data with expected output data for the given data verification request, the expected output data being determined using the selected one or more algorithms; and

determining a data verification result based at least partly on said comparing.

**Claims**

1. A method of verifying data in a data communication system, the data communication system comprising:

   a data verification provider server system; and
   user equipment potentially comprising one or more malicious software elements that can communicate data via a data communication channel established with a data processing organisation server system, the method comprising, at the user equipment:

   establishing a data communication channel with the data verification provider server system;
   deriving data to be verified by a user associated with the user equipment based at least in part on data received via the data communication channel established with the data verification provider server system;
   identifying the data to be verified by the user to the user via a user interface;
   receiving user input corresponding to a data verification response from the user via the user interface;
   in dependence on the user input, processing input data using a data verification result derivation algorithm to derive a data verification result, the data verification result derivation algorithm being associated with the given data verification request and varying between different data verification requests from the data verification provider server system; and
   transmitting data verification result data based on the derived data verification result to the data verification provider server system via the data communication channel established with the data verification provider server system.

2. A method according to claim 1, wherein the data received via the data communication channel established with the data verification provider server system is encrypted data, the method comprising:

   generating a decryption key to decrypt the encrypted data based at least in part on data received from a remote source; and
   decrypting the received encrypted data using the generated decryption key to produce decrypted data comprising at least the data to be verified by the user.

3. A method according to claim 2,
   wherein generating the decryption key comprises using at least the data received from the remote source as an input into a decryption key derivation algorithm, and
   wherein the decryption key derivation algorithm is associated with the given data verification request and varies between different data verification requests from the data verification provider server system.

4. A method according to claim 3, wherein the decryption key derivation algorithm is different from the data verification result derivation algorithm.

5. A method according to any of claims 2 to 4, wherein the remote source is the data verification provider server system.

6. A method according to any of claims 1 to 5,
   wherein the data to be verified comprises image data, and
   wherein the user input optionally corresponds to one or more of:

   a response to a CAPTCHA challenge;

a one-time password;
a code associated with confirming verification of the data identified to the user via a user interface; and
a code associated with rejecting verification of the data identified to the user via a user interface.

7. A method according to any of claims 1 to 6, wherein the data received via the data communication channel established with the data verification provider server system is received after the user has been authenticated by the data processing organisation server system.

8. A method according to any of claims 1 to 7, wherein the data verification result derivation algorithm varies non-deterministically between different data verification requests from the data verification provider server system.

9. A method according to any of claims 1 to 8, comprising storing one or more decoy algorithms with the data verification result derivation algorithm in a memory.

10. A method according to any of claims 1 to 9, comprising receiving data identifying the data verification result derivation algorithm via the data communication channel established with the data verification provider server system.

11. A method according to any of claims 1 to 10,
wherein establishing the data communication channel with the data verification provider server system comprises using one or more data verification software elements received via a data communication network, and
wherein the one or more data verification software elements vary between different data verification requests from the data verification provider server system.

12. A method according to any of claims 1 to 11, wherein the data verification result derivation algorithm comprises a mathematical function defining a mathematical relationship between input data and output data.

13. A method according to any of claims 1 to 12, wherein the input data comprises the received user input.

14. User equipment for verifying data in a data communication system, the data communication system comprising a data verification provider server system and the user equipment potentially comprising one or more malicious software elements that can communicate data via a data communication channel established with a data processing organisation server system, wherein the user equipment is configured to:

establish a data communication channel with the data verification provider server system;
derive data to be verified by a user associated with the user equipment based at least in part on data received via the data communication channel established with the data verification provider server system;
identify the data to be verified by the user to the user via a user interface;
receive user input corresponding to a data verification response from the user via the user interface;
in dependence on the user input, process input data using a data verification result derivation algorithm to derive a data verification result, the data verification result derivation algorithm being associated with the given data verification request and varying between different data verification requests from the data verification provider server system; and
transmit data verification result data based on the derived data verification result to the data verification provider server system via the data communication channel established with the data verification provider server system.

15. Computer software adapted to perform a method of verifying data in a data communication system, the data communication system comprising:

a data verification provider server system; and
user equipment potentially comprising one or more malicious software elements that can communicate data via a data communication channel established with a data processing organisation server system, the method comprising, at the user equipment:

establishing a data communication channel with the data verification provider server system;
deriving data to be verified by a user associated with the user equipment based at least in part on data received via the data communication channel established with the data verification provider server system;
identifying the data to be verified by the user to the user via a user interface;
receiving user input corresponding to a data verification response from the user via the user interface;

in dependence on the user input, process input data using a data verification result derivation algorithm to derive a data verification result, the data verification result derivation algorithm being associated with the given data verification request and varying between different data verification requests from the data verification provider server system; and

transmitting data verification result data based on the derived data verification result to the data verification provider server system via the data communication channel established with the data verification provider server system.

FIG. 1

FIG. 2

120                                    110

3a

3b

3c

3d

3e

3f

3g

FIG. 3

FIG. 4A

FIG. 4B

FIG. 5

FIG. 6

Europäisches
Patentamt

European
Patent Office

Office européen
des brevets

# EUROPEAN SEARCH REPORT

Application Number

EP 17 17 7215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/173124 A1 (FELDMAN MARC [US]) 14 July 2011 (2011-07-14) * paragraphs [0007], [0010] * * paragraphs [0020] - [0038] * | 1-15 | INV. G06F21/14 G06F21/56 G06F21/33 |
| A | ATANAS FILYANOV ET AL: "Uni-directional trusted path: Transaction confirmation on just one device", DEPENDABLE SYSTEMS&NETWORKS (DSN), 2011 IEEE/IFIP 41ST INTERNATIONAL CONFERENCE ON, IEEE, 27 June 2011 (2011-06-27), pages 1-12, XP031896359, DOI: 10.1109/DSN.2011.5958202 ISBN: 978-1-4244-9232-9 * sections I, III, IV * * figures 2,4 * | 1-15 | |
| A | US 2012/198528 A1 (BAUMHOF ANDREAS [AU]) 2 August 2012 (2012-08-02) * paragraph [0002] * * paragraph [0006] * * paragraphs [0010] - [0015] * * paragraphs [0044] - [0074]; figures 1,2 * | 1-15 | TECHNICAL FIELDS SEARCHED (IPC) G06Q H04L G06F |

The present search report has been drawn up for all claims

| Place of search | Date of completion of the search | Examiner |
|---|---|---|
| The Hague | 23 October 2017 | Ruiz Sanchez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 17 7215

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2017

| Patent document cited in search report | | | Publication date | Patent family member(s) | | | Publication date |
|---|---|---|---|---|---|---|---|
| US 2011173124 | A1 | | 14-07-2011 | CN | 102763129 | A | 31-10-2012 |
| | | | | EP | 2521994 | A2 | 14-11-2012 |
| | | | | US | 2011173124 | A1 | 14-07-2011 |
| | | | | WO | 2011084832 | A2 | 14-07-2011 |
| US 2012198528 | A1 | | 02-08-2012 | AU | 2011200413 | B1 | 15-09-2011 |
| | | | | US | RE46158 | E | 20-09-2016 |
| | | | | US | 2012198528 | A1 | 02-08-2012 |
| | | | | US | 2017201547 | A1 | 13-07-2017 |
| | | | | WO | 2012103573 | A1 | 09-08-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2013050640 W
- EP 13717810 A